(19) Europäisches Patentamt / European Patent Office / Office européen des brevets

(11) **EP 4 351 248 A1**

(12) **EUROPEAN PATENT APPLICATION**
published in accordance with Art. 153(4) EPC

(43) Date of publication:
**10.04.2024 Bulletin 2024/15**

(21) Application number: **22827427.0**

(22) Date of filing: **14.06.2022**

(51) International Patent Classification (IPC):
**H04W 72/04** (2009.01)   **H04W 74/08** (2009.01)
**H04W 4/40** (2018.01)

(52) Cooperative Patent Classification (CPC):
**H04W 4/40; H04W 72/04; H04W 74/08**

(86) International application number:
**PCT/CN2022/098627**

(87) International publication number:
**WO 2022/267931 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2021 CN 202110695123**

(71) Applicant: **Huawei Technologies Co., Ltd.**
**Longgang**
**Shenzhen, Guangdong 518129 (CN)**

(72) Inventors:
• **DONG, Lei**
  **Shenzhen, Guangdong 518129 (CN)**
• **SU, Hongjia**
  **Shenzhen, Guangdong 518129 (CN)**
• **GUO, Wenting**
  **Shenzhen, Guangdong 518129 (CN)**
• **LU, Lei**
  **Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND COMMUNICATION APPARATUS**

(57)   This application provides a communication method and a communication apparatus. In technical solutions provided in this application, after accessing a channel based on a listen before talk LBT process and determining a channel occupancy time, a first terminal device determines a sidelink resource in the channel occupancy time, and then performs sidelink communication with a second terminal device on the sidelink resource. According to the communication method, the first terminal device and the second terminal device may perform sidelink communication by using a resource on an unlicensed frequency band.

FIG. 3

**Description**

This application claims priority to Chinese Patent Application No. 202110695123.1, filed with the China National Intellectual Property Administration on June 22, 2021 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus.

**BACKGROUND**

A vehicle-to-everything (vehicle-to-vehicle, V2V) technology implements communication between a vehicle and the outside. There are two types of interfaces for V2X based on the 5th generation (the 5th generation, 5G) new radio (new radio, NR) network: a Uu interface and a PC5 interface. The Uu interface is used for communication between a network device and a terminal device, and the PC5 interface is used for sidelink (sidelink, SL) communication between terminal devices. Both the communication interfaces can be used to transmit V2X data.

Currently, when SL communication transmission is performed between terminal devices, a common resource allocation mode is as follows: A terminal device serves as a scheduling terminal device, and sends resource scheduling information to another terminal device in a same group as the scheduling terminal device, to control or coordinate use of radio resources in a centralized manner.

The terminal devices that perform SL communication may alternatively use an unlicensed spectrum resource. In this case, the terminal devices need to access a channel based on a listen before talk (listen before talk, LBT) process, and perform communication within a specific time period. In a communication scenario with an unlicensed spectrum or another similar communication scenario, how to effectively determine a transmission resource between the terminal devices that perform SL communication is a problem that needs to be resolved.

**SUMMARY**

This application provides a communication method and a communication apparatus, to effectively determine a transmission resource for SL communication when a terminal device uses an unlicensed spectrum or in another similar communication scenario, thereby ensuring efficiency of the sidelink communication.

According to a first aspect, this application provides a communication method. A first terminal device accesses a channel based on a listen before talk LBT process, and determines a channel occupancy time; the first terminal device determines a sidelink resource in the channel occupancy time; and the first terminal device sends, on the sidelink resource, sidelink information to a second terminal device, or receives, on the sidelink resource, sidelink information from a second terminal device.

According to the communication method provided in this embodiment of this application, the first terminal device accesses the channel based on the LBT process, determines the channel occupancy time, and determines the sidelink resource for performing sidelink communication with the second terminal device in the channel occupancy time, to enable the first terminal device and the second terminal device to communicate based on the sidelink resource. According to the foregoing method, the first terminal device may determine the sidelink resource required when the second terminal device performs sidelink communication, to enable the first terminal device and the second terminal device to perform sidelink communication by using a resource on an unlicensed frequency band. In addition, spectrum resource utilization may be improved.

With reference to the first aspect, in a possible implementation, the first terminal device sends first indication information and/or second indication information to the second terminal device, where the first indication information indicates a time domain position of the sidelink resource, and the second indication information indicates a frequency domain position of the sidelink resource.

In this implementation, the first terminal device notifies the second terminal device of the sidelink resource by sending indication information to the second terminal device, to enable the first terminal device to communicate with the second terminal device by using the sidelink resource. According to the method, the second terminal device does not need to determine the sidelink resource. Therefore, a level of interference in a system is reduced, and transmission reliability of the system is improved.

With reference to the first aspect, in a possible implementation, the first indication information includes L bits, and an $i^{th}$ bit in the L bits indicates whether the sidelink resource includes an $i^{th}$ time unit in L time units, where i=1, 2, ..., or L, and L is a positive integer.

In this implementation, the first terminal device notifies the second terminal device of a time unit that is included in the channel occupancy time and in which the sidelink information is to be sent by sending the first information that includes the L bits. It may be understood that in this implementation, when a plurality of terminal devices need to perform SL communication, the first terminal device may send a plurality of different pieces of first indication information to the plurality of terminal devices, so that time units may be determined for the plurality of terminal devices.

In an example, it is assumed that 10 terminal devices need to perform SL communication. In this case, the first terminal device may separately send the first indication information (that is, a total of 10 pieces of first indication information is included) to the 10 terminal devices, and any two pieces of first indication information in the 10 pieces of first indication information are different. In other words, the first terminal device determines a time unit that may be used for each of the 10 terminal devices by using the 10 different pieces of first indication information.

With reference to the first aspect, in a possible implementation, the second indication information includes M bits, and a $j^{th}$ bit in the M bits indicates whether the sidelink resource includes a $j^{th}$ frequency unit in M frequency units, where j=1, 2, ..., or M, and M is a positive integer.

In this implementation, the first terminal device indicates to the second terminal device a frequency unit that is in the M frequency units and on which the sidelink information is to be sent by sending the second information that includes the M bits. It may be understood that in this implementation, when a plurality of terminal devices need to perform SL communication, the first terminal device may send a plurality of different pieces of second indication information to the plurality of terminal devices, so that frequency units may be determined for the plurality of terminal devices.

In an example, it is assumed that 10 terminal devices need to perform SL communication. In this case, the first terminal device may separately send the second indication information (that is, a total of 10 pieces of second indication information is included) to the 10 terminal devices, and any two pieces of second indication information in the 10 pieces of second indication information are different. In other words, the first terminal device determines a frequency unit that may be used for each of the 10 terminal devices by using the 10 different pieces of second indication information.

With reference to the first aspect, in a possible implementation, that the first terminal device determines a sidelink resource in the channel occupancy time includes: The first terminal device determines, based on one or more of an identifier of the first terminal device, an identifier of the second terminal device, and/or a quantity of terminal devices included in a terminal device set, one or more time units occupied by the sidelink resource in the channel occupancy time, where the terminal device set includes the second terminal device, or the terminal device set includes the second terminal device and the first terminal device.

In this implementation, both the first terminal device and the second terminal device may determine, based on the foregoing elements, a time unit occupied by the sidelink resource in the channel occupancy time. Therefore, in this implementation, the first terminal device does not need to send indication information that indicates a time domain position to the second terminal device. Therefore, overheads of signaling transmission are reduced, a level of interference in a communication system is reduced, and transmission reliability of the communication system is improved.

With reference to the first aspect, in a possible implementation, that the first terminal device determines a sidelink resource in the channel occupancy time includes: The first terminal device determines, based on a value obtained when the identifier of the first terminal device and/or the identifier of the second terminal device modulo a quantity of time units included in the channel occupancy time, a time unit for the sidelink resource in the channel occupancy time.

In this implementation, the first terminal device and the second terminal device may determine, according to a rule by which an identifier modulo the quantity of time units included in the channel occupancy time, the time unit for the sidelink resource in the channel occupancy time.

It may be understood that in this implementation, because terminal devices are corresponding to different identifiers, in some cases, the different identifiers may be corresponding to different time units, and may determine different time domain resources for the different terminal devices. For example, there are 10 terminal devices, and identifiers of the 10 terminal devices are respectively corresponding to 1 to 10. It is assumed that the channel occupancy time includes 10 time units. In this case, values obtained when the identifiers modulo 10 are respectively corresponding to 1 to 10. In this case, 1 may be corresponding to the first time unit of the channel occupancy time, the third terminal device may be corresponding to the third time unit of the channel occupancy time, and so on. Therefore, according to the foregoing method, when there are a plurality of different terminal devices, different time units may be determined for the different terminal devices.

With reference to the first aspect, in a possible implementation, that the first terminal device determines a sidelink resource in the channel occupancy time includes: The first terminal device determines, based on one or more of the identifier of the first terminal device, the identifier of the second terminal device, and/or the quantity of terminal devices included in the terminal device set, a frequency unit occupied by the sidelink resource in one time unit, where the terminal device set includes the second terminal device, or the terminal device set includes the second terminal device and the first terminal device.

In this implementation, both the first terminal device and the second terminal device may determine, based on the foregoing elements, the frequency unit occupied by the sidelink resource in one time unit. Therefore, in this implementation, the first terminal device does not need to send indication information that indicates a frequency domain position to the second terminal device. Therefore, overheads of signaling transmission are reduced, a level of interference in a communication system is reduced, and transmission reliability of the communication system is improved.

With reference to the first aspect, in a possible implementation, that the first terminal device determines a sidelink resource in the channel occupancy time includes: The first terminal device determines, based on a value obtained when the identifier of the first terminal device and/or the identifier of the second terminal device modulo a quantity of frequency units included in one time unit, the frequency unit occupied by the sidelink resource in the time unit.

In this implementation, the first terminal device and the second terminal device may determine, according to a rule by which an identifier modulo the quantity of frequency units included in one time unit, the frequency unit occupied by the sidelink resource in the time unit.

It may be understood that in this implementation, because terminal devices are corresponding to different identifiers, in some cases, the different identifiers may be corresponding to different frequency units. Therefore, according to the foregoing method, when there are a plurality of different terminal devices, different frequency units may be determined for the different terminal devices.

With reference to the first aspect, in a possible implementation, the identifier of the first terminal device is determined based on an index of the first terminal device in the terminal device set, the identifier of the second terminal device is determined based on an index of the second terminal device in the terminal device set, and the terminal device set includes the second terminal device, or the terminal device set includes the second terminal device and the first terminal device.

With reference to the first aspect, in a possible implementation, that the first terminal device determines a sidelink resource in the channel occupancy time includes: The first terminal device determines, based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units included in the channel occupancy time, and/or a quantity of terminal devices included in a terminal device set, one or more time units occupied by the sidelink resource in the channel occupancy time.

In this implementation, both the first terminal device and the second terminal device may determine, based on the foregoing elements, a time unit occupied by the sidelink resource in the channel occupancy time. Therefore, in this implementation, the first terminal device does not need to send indication information that indicates a time domain position to the second terminal device. Therefore, overheads of signaling transmission are reduced, a level of interference in a communication system is reduced, and transmission reliability of the communication system is improved.

In addition, in this implementation, in addition to one or more of the identifier of the first terminal device, the identifier of the second terminal device, and the quantity of terminal devices included in the terminal device set, the quantity of times of transmission of the first terminal device in the channel occupancy time, the quantity of times of transmission of the second terminal device in the channel occupancy time, and the quantity of time units included in the channel occupancy time are further considered. Therefore, according to the foregoing method, a problem that terminal devices that simultaneously send sidelink information cannot receive information from each other in multicast may be further avoided.

With reference to the first aspect, in a possible implementation, that the first terminal device determines a sidelink resource in the channel occupancy time includes: The first terminal device determines, based on one or more of the identifier of the first terminal device, the identifier of the second terminal device, the one or more time units occupied by the sidelink resource in the channel occupancy time, a quantity of frequency units included in each time unit, and/or the quantity of terminal devices included in the terminal device set, one or more frequency units occupied by the sidelink resource in the time unit.

In this implementation, both the first terminal device and the second terminal device may determine, based on the foregoing elements, the frequency unit occupied by the sidelink resource in the time unit. Therefore, in this implementation, the first terminal device does not need to send indication information that indicates a frequency domain position to the second terminal device. Therefore, overheads of signaling transmission are reduced, a level of interference in a communication system is reduced, and transmission reliability of the communication system is improved.

According to a second aspect, this application provides a communication method. The method includes: A second terminal device determines a sidelink resource in a channel occupancy time, where the channel occupancy time is determined by a first terminal device. The second terminal device sends, on the sidelink resource, sidelink information to the first terminal device, or receives, on the sidelink resource, sidelink information from the first terminal device.

In the communication method, the sidelink resource determined by the second terminal device is in the channel occupancy time, and the channel occupancy time is determined by the first terminal device. In the method, the second terminal device may determine the sidelink resource used to communicate with the first terminal device, to ensure efficiency of sidelink communication. In addition, the second terminal device may not receive indication information that is of the sidelink resource and that is sent by the first terminal device. Therefore, overheads of signaling transmission are reduced, a level of interference in a communication system is reduced, and transmission reliability of the communication system is improved.

With reference to the second aspect, in a possible implementation, that a second terminal device determines a sidelink resource in a channel occupancy time includes: The second terminal device determines, based on one or more of an identifier of the first terminal device, an identifier of the second terminal device, and/or a quantity of terminal devices included in a terminal device set, one or more time units occupied by the sidelink resource in the channel occupancy time, where the terminal device set includes the second terminal device, or the terminal device set includes the second terminal device and the first terminal device.

In this implementation, both the second terminal device and the first terminal device may determine, based on the foregoing elements, a time unit occupied by the sidelink resource in the channel occupancy time. Therefore, in this implementation, the second terminal device does not need to receive indication information that indicates a time domain position and that is sent by the first terminal device. Therefore, overheads of signaling transmission are reduced, a level of interference in a communication system is reduced, and transmission reliability of the communication system is improved.

With reference to the second aspect, in a possible implementation, that a second terminal device determines a sidelink resource in a channel occupancy time includes: The second terminal device determines, based on a value obtained when the identifier of the first terminal device and/or the identifier of the second terminal device modulo a quantity of time units included in the channel occupancy time, a time unit for the sidelink resource in the channel occupancy time.

In this implementation, the second terminal device and the first terminal device may determine, according to a rule by which an identifier modulo the quantity of time units included in the channel occupancy time, the time unit for the sidelink resource in the channel occupancy time.

It may be understood that in this implementation, because terminal devices are corresponding to different identifiers, in some cases, the different identifiers may be corresponding to different time units. For example, there are 10 terminal devices, and identifiers of the 10 terminal devices are respectively corresponding to 1 to 10. It is assumed that the channel occupancy time includes 10 time units. In this case, values obtained when the identifiers modulo 10 are respectively corresponding to 1 to 10. In this case, 1 may be corresponding to the first time unit of the channel occupancy time, the third terminal device may be corresponding to the third time unit of the channel occupancy time, and so on. Therefore, according to the foregoing method, when there are a plurality of different terminal devices, different time units may be determined for the different terminal devices.

With reference to the second aspect, in a possible implementation, that a second terminal device determines a sidelink resource in a channel occupancy time includes: The second terminal device determines, based on one or more of the identifier of the first terminal device, the identifier of the second terminal device, and/or the quantity of terminal devices included in the terminal device set, a frequency unit occupied by the sidelink resource in one time unit, where the terminal device set includes the second terminal device, or the terminal device set includes the second terminal device and the first terminal device.

In this implementation, both the second terminal device and the first terminal device may determine, based on the foregoing elements, the frequency unit occupied by the sidelink resource in one time unit. Therefore, in this implementation, the second terminal device does not need to receive indication information that indicates a frequency domain position and that is sent by the first terminal device. Therefore, overheads of signaling transmission are reduced, a level of interference in a communication system is reduced, and transmission reliability of the communication system is improved.

With reference to the second aspect, in a possible implementation, that a second terminal device determines a sidelink resource in a channel occupancy time includes: The second terminal device determines, based on a value obtained after the identifier of the first terminal device and/or the identifier of the second terminal device modulo a quantity of frequency units included in one time unit, the frequency unit occupied by the sidelink resource in the time unit.

In this implementation, the second terminal device and the first terminal device may determine, according to a rule by which an identifier modulo the quantity of frequency units included in one time unit, the frequency unit occupied by the sidelink resource in the time unit.

It may be understood that in this implementation, because terminal devices are corresponding to different identifiers, in some cases, the different identifiers may be corresponding to different frequency units. Therefore, according to the foregoing method, when there are a plurality of different terminal devices, different frequency units may be determined for the different terminal devices.

With reference to the second aspect, in a possible implementation, the identifier of the first terminal device is determined based on an index of the first terminal device in the terminal device set, the identifier of the second terminal device is determined based on an index of the second terminal device in the terminal device set, and the terminal device set includes the second terminal device, or the terminal device set includes the second terminal device and the first terminal device.

With reference to the second aspect, in a possible implementation, that a second terminal device determines a sidelink resource in a channel occupancy time includes: The second terminal device determines, based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units included in the channel occupancy time, and/or a quantity of terminal devices included in a terminal device set, one or more time units occupied by the sidelink resource in the channel occupancy time.

In this implementation, both the second terminal device and the first terminal device may determine, based on the foregoing elements, a time unit occupied by the sidelink resource in the channel occupancy time. Therefore, in this implementation, the second terminal device does not need to receive indication information that indicates a time domain position and that is sent by the first terminal device. Therefore, overheads of signaling transmission are reduced, a level of interference in a communication system is reduced, and transmission reliability of the communication system is improved.

In addition, in this implementation, in addition to one or more of the identifier of the first terminal device, the identifier of the second terminal device, and the quantity of terminal devices included in the terminal device set, the quantity of times of transmission of the first terminal device in the channel occupancy time, the quantity of times of transmission of the second terminal device in the channel occupancy time, and the quantity of time units included in the channel occupancy time are further considered. Therefore, according to the foregoing method, a problem that terminal devices that simultaneously send sidelink information cannot receive information from each other in multicast may be avoided.

With reference to the second aspect, in a possible implementation, that a second terminal device determines a sidelink resource in a channel occupancy time includes: The second terminal device determines, based on one or more of the identifier of the first terminal device, the identifier of the second terminal device, the one or more time units occupied by the sidelink resource in the channel occupancy time, a quantity of frequency units included in each time unit, and/or the quantity of terminal devices included in the terminal device set, one or more frequency units occupied by the sidelink resource in the time unit.

In this implementation, both the first terminal device and the second terminal device may determine, based on the foregoing elements, the frequency unit occupied by the sidelink resource in the time unit. Therefore, in this implementation, the first terminal device does not need to send indication information that indicates a frequency domain position to the second terminal device. Therefore, overheads of signaling transmission are reduced, a level of interference in a communication system is reduced, and transmission reliability of the communication system is improved.

According to a third aspect, this application provides a communication method. The communication method includes: A second terminal device receives first indication information and/or second indication information from a first terminal device, where the first indication information indicates a time domain position of a sidelink resource, the second indication information indicates a frequency domain position of the sidelink resource, and the sidelink resource is determined by the first terminal device in a channel occupancy time. The second terminal device sends, on the sidelink resource, sidelink information to the first terminal device, or receives, on the sidelink resource, sidelink information from the first terminal device.

In the communication method, the second terminal device obtains the time domain position and the frequency domain position of the sidelink resource by receiving indication information sent by the first terminal device, so that the first terminal device and the second terminal device perform sidelink communication by using a resource on an unlicensed frequency band. In the method, the second terminal device does not need to determine the sidelink resource. This may reduce a level of interference in a system and improve transmission reliability of the system.

With reference to the third aspect, in a possible implementation, the first indication information includes L bits, and an $i^{th}$ bit in the L bits indicates whether the sidelink resource includes an $i^{th}$ slot in L time units, where i=1, 2, ..., or L, and L is a positive integer.

In this implementation, the second terminal device may determine a time unit that is included in the channel occupancy time and in which the sidelink information is to be sent by receiving the first information that includes the L bits and that is sent by the first terminal device.

With reference to the third aspect, in a possible implementation, the second indication information includes M bits, and a $j^{th}$ bit in the M bits indicates whether the sidelink resource includes a $j^{th}$ frequency unit in M frequency units, where j=1, 2, ..., or M, and M is a positive integer.

In this implementation, the second terminal device may determine a frequency unit that is in the M frequency units and on which the sidelink information is sent by receiving the second information that includes the M bits and that is to be sent by the first terminal device.

According to a fourth aspect, this application provides a communication apparatus, where the apparatus includes a transceiver module and a processing module, and the modules are configured to implement the method according to any one of the first aspect or the possible implementations of the first aspect.

According to a fifth aspect, this application provides a communication apparatus, where the apparatus includes a transceiver module and a processing module, and the modules are configured to implement the method according to any one of the second aspect or the possible implementations of the second aspect.

According to a sixth aspect, this application provides a communication apparatus, where the apparatus includes a transceiver module and a processing module, and the modules are configured to implement the method according to any one of the third aspect or the possible implementations of the third aspect.

According to a seventh aspect, this application provides a communication apparatus, including a processor. The processor is configured to invoke program instructions in a memory to perform the method according to any one of the first aspect and the possible implementations, or perform the method according to any one of the second aspect and the possible implementations, or perform the method according to any one of the second aspect and the possible implementations.

In a feasible implementation, the communication apparatus further includes a memory. The memory is configured to store program instructions and data that are needed to implement a function of the method in each of the foregoing aspects. The communication apparatus may be, for example, a chip system. The chip system may be a system on chip (system on chip, SOC), may be a baseband chip, or the like. The baseband chip may include a processor, a channel encoder, a digital signal processor, a modem, an interface module, and the like.

According to an eighth aspect, this application provides a computer-readable medium, where the computer-readable medium stores program code executed by a computer. The program instructions include the method according to any one of the first aspect or the possible implementations of the first aspect, the method according to any one of the second aspect or the possible implementations of the second aspect, or the method according to any one of the third aspect or the possible implementations of the third aspect.

According to a ninth aspect, this application provides a computer program product, where the computer program product includes computer program code. When the computer program code is run on a computer, the computer is enabled to implement the method according to any one of the first aspect or the possible implementations of the first aspect, or the method according to any one of the second aspect or the possible implementations of the second aspect, or the method according to any one of the third aspect or the possible implementations of the third aspect.

For technical effects brought of any one of the implementations of the fourth aspect to the ninth aspect, refer to technical effects of any one of the possible implementations of the first aspect, or refer to technical effects of any one of the possible implementations of the second aspect and the third aspect. Details are not described again.

**BRIEF DESCRIPTION OF DRAWINGS**

FIG. 1 is a schematic diagram of a structure of a communication scenario according to this application;
FIG. 2 is a schematic diagram of a structure of a terminal device according to an embodiment of this application;
FIG. 3 is a schematic flowchart of a communication method according to an embodiment of this application;
FIG. 4 is a schematic diagram of an interleaved resource block according to an embodiment of this application;
FIG. 5 is a schematic flowchart of a communication method according to another embodiment of this application;
FIG. 6 is a schematic diagram of an interleaved resource block according to another embodiment of this application;
FIG. 7 is a schematic diagram of a time-frequency resource in a unicast scenario according to an embodiment of this application;
FIG. 8 is a schematic diagram of another time-frequency resource in a unicast scenario according to an embodiment of this application;
FIG. 9 is a schematic diagram of a time-frequency resource in a multicast scenario according to an embodiment of this application;
FIG. 10 is a schematic diagram of another time-frequency resource in a multicast scenario according to an embodiment of this application;
FIG. 11 is a schematic diagram of still another time-frequency resource in a multicast scenario according to an embodiment of this application;
FIG. 12 is a schematic diagram of a time-frequency resource in a multicast scenario according to an embodiment of this application;
FIG. 13 is a schematic diagram of a structure of a communication apparatus according to an embodiment of this application;
FIG. 14 is a schematic diagram of a structure of a communication apparatus according to another embodiment of this application; and
FIG. 15 is a schematic diagram of a structure of a communication apparatus according to still another embodiment of this application.

**DESCRIPTION OF EMBODIMENTS**

For ease of understanding, related terms used in this application are first described.

1. LBT mechanism

A listen before talk (listen before talk, LBT) mechanism is a technology widely used in radio communication. Before starting transmission, a radio transmitter first monitors a radio environment of the radio transmitter, and detects whether a channel is idle. If the channel is in a busy state, the radio transmitter waits to perform the transmission until the channel is idle, to avoid a channel access conflict and implement channel spectrum sharing.

2. PC5 interface

A proximity communication (proximity communication) interface, also referred to as a PC5 interface, is a communication interface between terminal devices, that is, a short-range direct communication interface between vehicles, man, and road infrastructure. The PC5 interface features low-latency, high-capacity, and high-reliability communication through a direct connection, broadcasting, and network scheduling.

3. Uu interface

A universal terrestrial radio access network and user equipment (utran ue, Uu) interface is a communication interface between a terminal device and a network device, and features a capability of implementing reliable long-range communication in a larger area.

4. Interleaved resource block

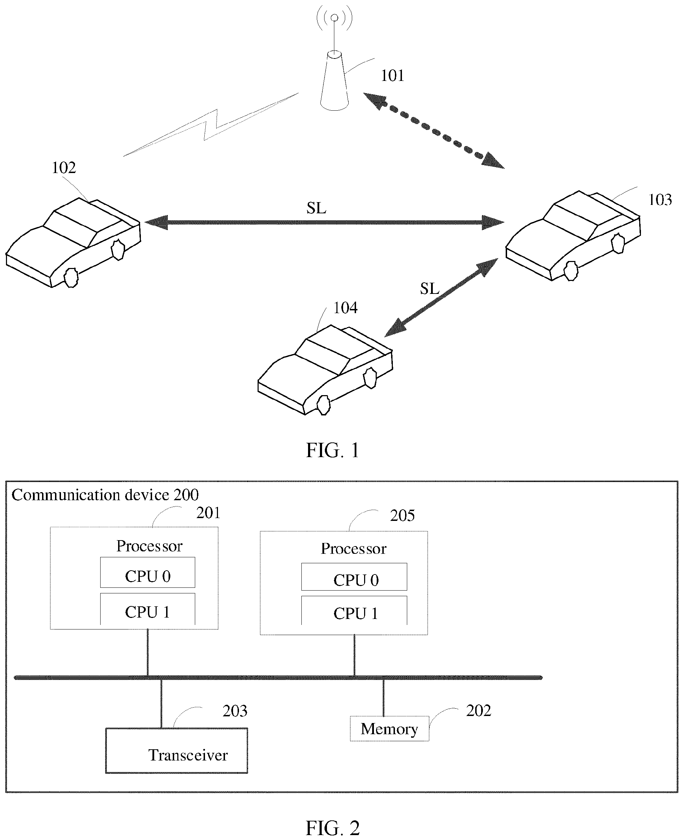

An interleaved resource block is a specific manner of using a frequency domain resource by a terminal device in an unlicensed system of a new radio (new radio, NR) network when the terminal device accesses a channel. This may ensure that the terminal device occupies more than 80% of a bandwidth of an allocated frequency band, and meet a regulatory requirement on an unlicensed spectrum.
A conventional protocol defines two types of interleaved resource blocks: For a 15 kHz subcarrier spacing, one interleaved resource block includes resource blocks (resource blocks, RBs) whose indexes are $\{m, m + 10, m + 20, ... \}$, where a value range of $m$ is $\{0, 1, ..., 9\}$. Therefore, there are 10 interleaved resource blocks in a 20 M frequency band. For a 30 kHz subcarrier spacing, one interleaved resource block includes RBs whose indexes are $\{m, m + 5, m + 10, ... \}$, where a value range of $m$ is $\{0, 1, ..., 4\}$. Therefore, there are five interleaved resource blocks in a single frequency band.
The method provided in embodiments of this application may be applied to a system in which terminal devices communicate with each other on an SL. For example, the foregoing system is a V2X communication system, a D2D communication system, an Internet of Vehicles communication system, a long term evolution system, a 5th generation mobile communication system such as an NR system, and a future communication system such as a 6G system.
For ease of understanding, a wireless communication system applicable to embodiments of this application is described in detail by using a communication system shown in FIG. 1 as an example. As shown in FIG. 1, the communication system includes a network device 101, a terminal device 102 that communicates with the network device 101, a terminal device 103 that communicates with the terminal device 102, and a terminal device 104 that communicates with the terminal device 103. Optionally, the network device 101 may further communicate with the terminal device 103.
Specific forms of the network device 101 and the terminal devices are not limited in this embodiment of this application.
For example, the network device 101 in FIG. 1 may be a macro base station eNB (evolved nodeB) in a long term evolution-based universal mobile communication system, may be a micro base station eNB in a heterogeneous network (heterogeneous network, HetNet), may be a baseband processing unit BBU (Base Band Unit, baseband unit) and a radio frequency unit RRU (Remote Radio Unit, remote radio unit) in a distributed base station scenario, may be a baseband pool BBU pool and a radio frequency unit RRU in a cloud radio access network (Cloud Radio Access Network, CRAN) scenario, and may be a new radio base station (NR nodeB, gNB), a new generation evolved base station (NG-eNB), or the like in a future wireless communication system.
For example, the terminal device may be a device that provides a user with voice and/or data connectivity, for example, a handheld device, a vehicle-mounted device, or the like with a wireless connection function. The terminal device may also be referred to as user equipment (user equipment, UE), an access terminal (access terminal), a user unit (user unit), a user station (user station), a mobile station (mobile station), a mobile (mobile) terminal, a remote station (remote station), a remote terminal (remote terminal), mobile equipment (mobile equipment), a user terminal (user terminal), a wireless communication device (wireless telecom equipment), a user agent (user agent), user equipment (user equipment), or a user apparatus. The terminal device may be a station (station, STA) in a wireless local area network (wireless local area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device, another processing device connected to a wireless modem, a vehicle-mounted device, a wearable device, a terminal in a next-generation communication system (for example, a 5th generation (fifth-generation, 5G) communication network), a terminal device in a future evolved public land mobile network (public land mobile network, PLMN), or the like. 5G may also be referred to as new radio (new radio, NR). In a possible application scenario of this application, the terminal device is a terminal device that often operates on land, for example, a vehicle-mounted device. In this application, for ease of description, a chip deployed in the foregoing device, or a chip may also be referred to as the terminal device.

In addition, all terminal devices shown in FIG. 1 may be within coverage of the network device 101; or some terminal devices may be within coverage of the network device 101, and some terminal devices are not within the coverage of the network device 101; or none of the terminal devices is within coverage of the network device 101. This is not limited in this embodiment of this application.

For the communication system shown in FIG. 1, there is a first communication interface between the network device 101 and each of the terminal device 102 and the terminal device 103, and there is a second interface between the terminal device 102 and the terminal device 103. Optionally, there is a second interface between the terminal device 103 and the terminal device 104.

For example, the first interface may be a Uu interface, and the second interface may be a PC5 interface.

In this embodiment of this application, a link for communication between the terminal device 102 and the terminal device 103 is referred to as a sidelink, and the terminal device 102 and the terminal device 103 may transmit data on the sidelink. Optionally, the terminal device 104 may perform sidelink communication with the terminal device 103 by using a sidelink formed with the terminal device 103.

It should be noted herein that a specific communication scenario between terminal devices is not limited in this embodiment of this application. For example, the terminal devices that communicate with each other may be vehicle-mounted devices that communicate with each other.

It may be understood that quantities of network devices and terminal devices shown in FIG. 1 are merely an example. In an actual process, the quantities of the network devices and the terminal devices may be other quantities. Certainly, the communication system may further include another network element (for example, a core network device). An access network device may be connected to the core network device. The core network device may be a network element in a 4G core network (for example, an evolved packet core (evolved packet core, EPC)) or a 5G core network (5G core, 5GC).

Currently, for the communication system shown in FIG. 1, when SL communication transmission is performed between the terminal devices, a common resource allocation mode is as follows. A terminal device is used as a scheduling terminal device. The scheduling terminal device selects, based on sensing, a resource used for sidelink communication, and then indicates the selected resource to a terminal device that needs to send sidelink information. Finally, the terminal device that needs to send the sidelink information sends the sidelink information on a resource indicated by indication information.

The communication system shown in FIG. 1 is used as an example. It is assumed that the terminal device 103 intends to send data to the terminal device 104, that is, communication between the terminal device 103 and the terminal device 104 is SL communication. In this case, the terminal device 103 needs to obtain a resource used for data transmission. In the conventional technology, a method for allocating the resource used for data transmission to the terminal device 103 may be, for example, as follows. The terminal device 104 is used as the scheduling terminal device. The terminal device 104 selects a sidelink resource that may be used by the terminal device 103 for data transmission through sensing, and indicates the selected resource to the terminal device 103. Then, the terminal device 103 obtains, based on indication information sent by the terminal device 102, the resource used for data transmission, to perform the sidelink communication with the terminal device 104.

For a specific implementation process in which the scheduling terminal device selects the resource through sensing and allocates the resource to the terminal device used for the sidelink communication, refer to related technical descriptions. Details are not described herein again.

It may be understood that the terminal device that performs SL communication may further use an unlicensed spectrum resource. In this case, the terminal device accesses a channel based on a listen before talk (listen before talk, LBT) process, and performs communication within a specific time. However, the conventional technology does not provide a method for effectively determining a transmission resource between terminal devices that perform SL communication in a communication scenario with an unlicensed spectrum or another similar communication scenario.

In view of this, this application provides a communication method, to effectively determine a transmission resource for SL communication when a terminal device uses an unlicensed spectrum or in another similar communication scenario, thereby ensuring efficiency of the sidelink communication.

The communication method provided in an embodiment of this application is applicable to a communication device 200 shown in FIG. 2. The communication device 200 may be configured to implement a function of the terminal device in FIG. 1, for example, may be a terminal device, or may be a chip used in the terminal device or another component with a terminal function. As shown in FIG. 2, the communication device 200 includes at least one processor 201, a memory 202, and a transceiver 203.

The following specifically describes each component of the communication device 200 with reference to FIG. 2.

The processor 201 is a control center of the communication device, and may be one processor or may be a collective name of a plurality of processing elements. For example, the processor 201 may be a central processing unit (central processing unit, CPU), or an application-specific integrated circuit (application-specific integrated circuit, ASIC), or one or more integrated circuits configured to implement this embodiment of this application, for example, one or more microprocessors (digital signal processor, DSP) or one or more field-programmable gate arrays (field-programmable gate array, FPGA).

The processor 201 may perform various functions of the communication device by running or executing a software program stored in the memory 202 and invoking data stored in the memory 202.

During a specific implementation, in an embodiment, the processor 201 may include one or more CPUs, for example, a CPU 0 and a CPU 1 shown in FIG. 2.

During a specific implementation, in an embodiment, the communication device may include a plurality of processors, for example, the processor 201 and a processor 205 shown in FIG. 2. Each of these processors may be a single-core processor (single-CPU), or may be a multicore processor (multi-CPU). The processor herein may be one or more communication devices, circuits, and/or processing cores configured to process data (for example, computer program instructions).

The memory 202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, this is not limited thereto. The memory 202 may exist independently, and is connected to the processor 201 by using a communication bus. Alternatively, the memory 202 may be integrated with the processor 201.

The memory 202 is configured to store a software program for executing the solutions of this application, and the processor 201 controls the execution, to implement the method provided in the following method embodiments.

The transceiver 203 is configured to communicate with another communication device. Certainly, the transceiver 203 may be further configured to communicate with a communication network, for example, the Ethernet, a radio access network (radio access network, RAN), a wireless local area network (wireless local area network, WLAN), or the like. The transceiver 203 may include a receiving unit to implement a receiving function, and a sending unit to implement a sending function.

The structure of the communication device shown in FIG. 2 does not constitute a limitation on the communication device. The communication device may include more or fewer components than those shown in the figure, or combine some components, or use a different component deployment.

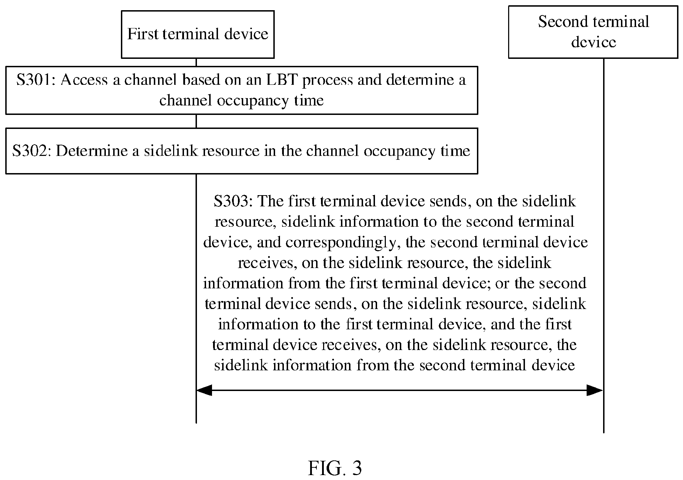

FIG. 3 is a schematic flowchart of a communication method according to an embodiment of this application. As shown in FIG. 3, the method according to this embodiment may include S301, S302, and S303. The method may be performed by a terminal device.

S301: A first terminal device accesses a channel based on a listen before talk LBT process, and determines a channel occupancy time.

In this embodiment, after accessing the channel based on the LBT process, the first terminal device may obtain a transmission resource. In an example, the transmission resource may include a plurality of sub-channels in frequency domain, or may include a plurality of interleaved resource blocks.

The interleaved resource blocks are of a resource allocation type for an interleaved structure newly introduced in an unlicensed communication system. For detailed descriptions, refer to descriptions in a conventional technology. Details are not described herein again.

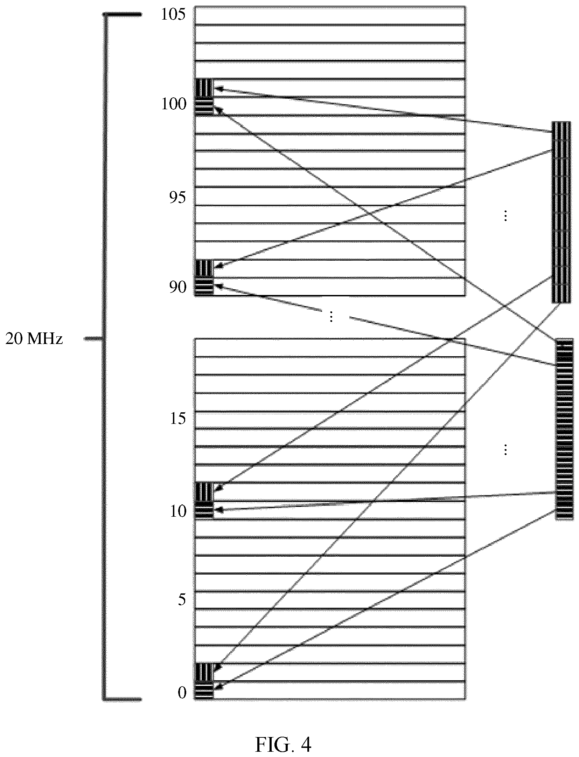

For example, FIG. 4 is a schematic diagram of a frequency domain resource obtained by a first terminal device. The frequency domain resource has a 20 megahertz (MHZ) bandwidth, and includes 10 interleaved resource blocks. As shown in FIG. 4, in the figure, a horizontal-stripe part is one interleaved resource block. To be specific, horizontal-stripe parts whose indexes are {0,10,20,30,40,50,60,70,80,90,100} each form one interleaved resource block. A vertical-stripe part is another interleaved resource block. To be specific, vertical-stripe parts whose indexes are {1,11,21,31,41,51,61,71,81,91,101} each form one interleaved resource block. Each interleaved resource block may be used by one terminal device for communication data transmission. For example, interleaved resource blocks represented by the horizontal-stripe parts in the figure may be used by one terminal device for communication data transmission, and interleaved resource blocks formed by the vertical-stripe parts in the figure may be used by another terminal device for communication data transmission.

It should be noted herein that the frequency domain resource that has 20 MHz bandwidth and that includes 10 interleaved resource blocks shown in FIG. 4 is merely an example. Alternatively, another quantity, for example, 5, of interleaved resource blocks may be included. This is not limited in this embodiment of this application.

In this embodiment, after accessing the channel based on the LBT process, the first terminal device further needs to determine the channel occupancy time (channel occupancy time, COT).

The channel occupancy time may be considered as an amount of time the first terminal device actually uses the channel after preempting the channel based on the LBT process, and the time is less than or equal to a maximum channel occupancy time (maximum channel occupancy time, MCOT).

For example, it is assumed that the MCOT obtained by the first terminal device based on the LBT process is equal to 10 ms. If the first terminal device needs to send only a small amount of information during communication, the first terminal device may use only first 5 ms of the 10 ms, avoiding a waste of frequency domain resources. If the first terminal device sends a large amount of data during communication, the entire MCOT may be used.

It should be noted herein that, for a specific implementation process in which the channel and the first terminal device obtain, based on the LBT process, the MCOT in which the channel can be occupied, refer to related technical descriptions. Details are not described herein again.

It should be further noted herein that an implementation of the LBT process is not limited in this embodiment of this application.

For example, the first terminal device may use the channel only after 16 microseconds (μs) after detecting that the channel is in an idle state.

For example, the first terminal device may directly use the channel only after 25 μs after detecting that the channel in the idle state.

For example, the first terminal device generates a random number X based on a contention window of a variable size, and may use the channel only after a period of time determined based on the random number X after detecting that the channel is in the idle state. The size of the contention window is related to a minimum value and a maximum value of X, and may be changed by the communication device.

It should be noted herein that spectrum resources in a 3GPP network are classified into a licensed spectrum resource and an unlicensed spectrum resource. An unlicensed spectrum is used as a supplement to a licensed spectrum to help an operator expand a service capacity. The unlicensed spectrum is commonly used in a plurality of technologies, for example, wireless fidelity (wireless fidelity, Wi-Fi), a radar, and long term evolution (long term evolution, LTE)-based licensed-assisted access (lte-based licensed-assisted access, LTE-LAA) to unlicensed spectrum, and the like. Therefore, in some countries or regions, the unlicensed spectrum needs to comply with a regulatory requirement when being used, to ensure that all devices may fairly share the resource, for example, for monitoring a channel before transmission or the like. When a transit node needs to send information, the LBT process needs to be performed first, and a resource may be occupied only when the channel is determined to be idle.

In other words, after the first terminal device in this embodiment of this application performs the LBT process, an obtained frequency domain resource is in the unlicensed spectrum.

S302: The first terminal device determines a sidelink resource in the channel occupancy time.

It may be understood that, in a communication system, if either a terminal device or a network device intends to send information to another device, the terminal device or the network device needs to first obtain a resource used to send the information, that is, a time point at which and frequency domain in which the information should be sent.

Similarly, for sidelink communication between terminal devices, if any terminal device intends to send sidelink information, the terminal device needs to obtain a resource used to send the sidelink information. In this application, the resource used for sidelink communication is also referred to as the sidelink resource.

For example, it is assumed that a second terminal device intends to send sidelink information to the first terminal device. The second terminal device needs to know not only a time period in which the sidelink information should be transmitted, but also frequency domain in which the sidelink information is sent. To be specific, if the sidelink resource used to transmit the sidelink information needs to be determined for the second terminal device, a specific time period and frequency domain in which the sidelink information should be sent needs to be determined. For example, after the first terminal device accesses the channel based on the LBT process, the obtained frequency domain resource includes 10 interleaved resource blocks, and a determined COT used for sidelink communication includes 10 slots. In this case, the first terminal device needs to determine the sidelink resource from the 10 slots and the 10 interleaved resource blocks.

In this embodiment, the sidelink resource is determined by the first terminal device. To be specific, the first terminal device may be considered as a terminal device that plays a role of a scheduler that controls or coordinates use of radio resources in a centralized manner. Therefore, in this application, the first terminal device is also referred to as a scheduling terminal device.

It may be further understood that, in this embodiment, a time domain resource in the sidelink resource determined by the first terminal device should be in the COT.

It should be noted herein that an implementation of determining the sidelink resource is not limited in this embodiment, and the sidelink resource may be, for example, determined according to a predefined rule.

S303: The first terminal device sends, on the sidelink resource, the sidelink information to the second terminal device, and correspondingly, the second terminal device receives, on the sidelink resource, the sidelink information or the second terminal device sends, on the sidelink resource, the sidelink information, and the first terminal device receives, on the sidelink resource, the sidelink information.

The second terminal device is a terminal device that performs sidelink communication with the first terminal device.

For example, the second terminal device needs to send the sidelink information to the first terminal device. It is assumed that after the first terminal device accesses the channel based on the LBT process, the obtained frequency domain resource includes 10 interleaved resource blocks, and a determined COT used for sidelink communication includes 10 slots. In this case, the sidelink resource determined by the first terminal device for the second terminal device is a second interleaved resource block in the 10 interleaved resource blocks and a fifth slot in the 10 slots. In this case, the second terminal device may send the sidelink information in the fifth slot on the second interleaved resource block, and correspondingly, the first terminal device receives the sidelink information.

According to the communication method provided in this embodiment of this application, after the first terminal device accesses the channel based on the LBT process and determines the channel occupancy time, the first terminal device determines the sidelink resource for performing sidelink communication with the second terminal device in the channel occupancy time, to enable the first terminal device and the second terminal device to communicate based on the sidelink resource. According to the foregoing method, the first terminal device may perform sidelink communication with the second terminal device by using a resource on an unlicensed frequency band.

In an optional embodiment, after the first terminal device determines the sidelink resource, the first terminal device may further send first indication information and/or second indication information to the second terminal device. Correspondingly, the second terminal device receives the first indication information and/or the second indication information from the first terminal device, where the first indication information indicates a time domain position of the sidelink resource, and the second indication information indicates a frequency domain position of the sidelink resource.

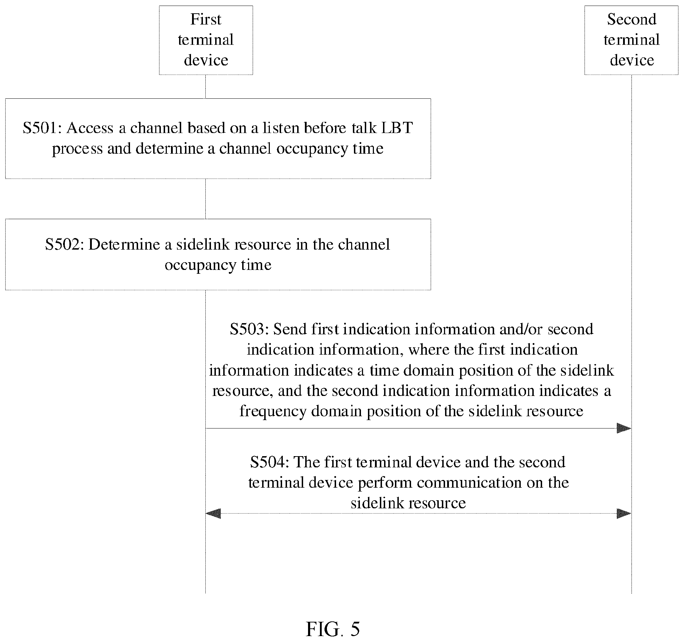

FIG. 5 shows a communication method between a first terminal device as a scheduling terminal device and a second terminal device according to another embodiment of this application.

S501: The first terminal device accesses a channel based on an LBT process and determines a channel occupancy time.

For detailed descriptions of this step, refer to S301 in the embodiment shown in FIG. 3. Details are not described herein again.

S502: The first terminal device determines a sidelink resource in the channel occupancy time.

For detailed descriptions of this step, refer to S302 in the embodiment shown in FIG. 3. Details are not described herein again.

It should be noted herein that a specific implementation in which the first terminal device determines the sidelink resource in the channel occupancy time is not limited in this embodiment. For example, an implicit rule method may be used, or another manner may be used.

S503: The first terminal device sends first indication information and/or second indication information to the second terminal device, where the first indication information indicates a time domain position of the sidelink resource, and the second indication information indicates a frequency domain position of the sidelink resource, and correspondingly, the second terminal device receives the first indication information and/or the second indication information.

In this embodiment, after the sidelink resource is determined, the first terminal device further indicates the sidelink resource to the second terminal device by using indication information, to enable the second terminal device to determine a sidelink resource for sending sidelink information.

For example, there are five second terminal devices that perform sidelink communication with the first terminal device. It is assumed that the first terminal device separately determines a sidelink resource for each of the five second terminal devices after accessing the channel based on the LBT process. In this case, the first terminal device may separately send indication information to the five second terminal devices, to enable the five second terminal devices to separately determine a time period and frequency domain in which the sidelink information should be sent.

In this embodiment, the first terminal device may send the first indication information and the second indication information as same information. To be specific, the same information includes both the time domain position of the sidelink resource and the frequency domain position of the sidelink resource. Alternatively, the first indication information and the second indication information may be sent separately. This is not limited in this embodiment.

In a possible implementation, the first terminal device may add the first indication information and/or the second indication information to sidelink control information (sidelink control information, SCI).

S504: The first terminal device and the second terminal device perform sidelink communication on the sidelink resource.

In this embodiment, after receiving the indication information, the second terminal device may perform sidelink communication with the first terminal device on the sidelink resource indicated by the indication information. For detailed descriptions of this step, refer to the descriptions in S303 in the embodiment shown in FIG. 3. Details are not described herein again.

According to the communication method provided in this embodiment of this application, the first terminal device notifies the second terminal device of the sidelink resource by sending indication information to the second terminal device, to enable the first terminal device to communicate with the second terminal device by using the sidelink resource.

In an optional embodiment, in a possible implementation of S503 shown in FIG. 5, the first indication information sent by the first terminal device to the second terminal device includes L bits, and an $i^{th}$ bit in the L bits indicates whether the sidelink resource includes an $i^{th}$ time unit in L time units, where i=1, 2, ..., or L, and L is a positive integer.

The time unit is not limited in this embodiment of this application. For example, the time unit may be a mini-slot, a slot, a symbol, a frame, or the like.

In this embodiment, L is equal to a length of the COT. In other words, the bits included in the first indication information are exactly in a one-to-one correspondence with the time units included in the COT. To be specific, a first bit in the first indication information indicates whether a first time unit in the channel occupancy time is included, a second bit in the first indication information indicates whether a second time unit in the channel occupancy time is included, and so on.

For example, the time unit is a slot. It is assumed that the COT includes six slots, and L is equal to 6. In this case, if a time domain resource determined by the first terminal device for the second terminal device is sent in a first slot in the six slots, the first indication information may be 100000, where a bit of 1 is used to indicate that the sidelink resource includes a slot corresponding to the bit, and a bit of 0 is used to indicate that the sidelink resource does not include a slot corresponding to the bit. Therefore, when receiving 100000, the second terminal device may learn that the sidelink information is sent in the first slot.

Alternatively, L may be less than a length of the COT. For example, L may be first L time units, last L time units, or intermediate L time units in the COT. For example, a plurality of second terminals may be divided into several groups, and locations of L time units corresponding to each group of second terminals in the COT are different.

According to the communication method provided in this embodiment of this application, the first terminal device may indicate to the second terminal device a time unit that is included in the channel occupancy time and in which the sidelink information is to be sent by sending the first indication information that includes the L bits.

In an optional embodiment, in a possible implementation of S503 shown in FIG. 5, the second indication information sent by the first terminal device to the second terminal device includes M bits, and a $j^{th}$ bit in the M bits indicates whether the sidelink resource includes a $j^{th}$ frequency unit in M frequency units, where j=1, 2, ..., or M, and M is a positive integer.

A specific form of the frequency unit is not limited in this embodiment of this application. For example, the frequency unit may be a sub-channel, or may be an interleaved resource block.

In this embodiment, M is equal to a quantity of frequency units included in the channel after the first terminal device accesses the channel. In other words, the bits included in the second indication information are exactly in a one-to-one correspondence with the frequency units. To be specific, a first bit in the second indication information indicates whether a first frequency unit in the M frequency units is included, a second bit in the second indication information indicates whether a second frequency unit in the M frequency units is included, and so on.

For example, the frequency unit includes 10 interleaved resource blocks. It is assumed that the first terminal device determines that the second terminal device may send the sidelink information on a first interleaved resource block, and the second indication information may be 1000000000. For the second terminal device, if received second indication information is 1000000000, the second terminal device may perform sidelink communication by using an interleaved resource block 1.

Alternatively, M may be less than a quantity of frequency units included in the channel. For example, M may be first M frequency units, last M frequency units, or intermediate M frequency units in all frequency units. For example, a plurality of second terminals may be divided into several groups, and locations of M frequency units corresponding to each group of second terminals are different in all frequency units included in the channel.

According to the communication method provided in this embodiment of this application, the first terminal device may indicate to the second terminal device a frequency unit that is in the M frequency units and on which the sidelink information is to be sent by sending the second indication information that includes the M bits.

It may be understood that there may be N second terminal devices that perform sidelink communication with the first terminal device. In this case, the first terminal device needs to determine a sidelink resource for sending the sidelink information for each of the N second terminal devices.

In this application, the first terminal device and all second terminal devices for which the first terminal device needs to determine sidelink resources are referred to as one group. In this application, the first terminal device in the group is also referred to as a scheduling terminal device, and is responsible for centralized scheduling or allocation of radio resources. It may be understood that sidelink communication between terminal devices in the group includes two manners. In a first manner, any second terminal device in the group performs unicast transmission with the first terminal device. In the other manner, any second terminal device in the group performs multicast transmission with the first terminal device.

For example, it is assumed that 10 second terminal devices need to send sidelink information to the first terminal device. In this case, the first terminal device needs to determine sidelink resources for the 10 second terminal devices. In the group, there are two communication scenarios. In a first scenario, all 10 second terminal devices only send the sidelink information to the first terminal device, and a remaining nine second terminal devices do not need to obtain the information. This may be understood as the unicast transmission. In the other scenario, when the 10 second terminal devices send the sidelink information to the first terminal device, a remaining nine second terminal devices need to receive the sidelink information. This may be considered as the multicast transmission.

With reference to two specific embodiments, the following describes a manner in which a first terminal device indicates a sidelink resource by using indication information and a manner in which the first terminal device and a second terminal device determine a sidelink resource according to a predefined rule in unicast transmission scenario and a multicast transmission scenario.

First, a manner in which a first terminal device indicates a sidelink resource to a second terminal device by using indication information in a unicast scenario is described.

In this embodiment, an example in which 20 second terminal devices send sidelink information to the first terminal device is used for description.

It should be understood that if there are 20 second terminal devices that send sidelink information to the first terminal device, the first terminal device needs to determine a sidelink resource for each of the 20 second terminal devices.

In this case, when the first terminal device allocates a sidelink resource to any of the second terminal devices through indication, the first terminal device may separately indicate a time domain resource and a frequency domain resource. The time domain resource includes a time unit occupied by the second terminal device in a channel occupancy time, and the frequency domain resource includes a sub-channel or an interleaved resource block occupied by the second terminal device on a channel accessed by the first terminal device.

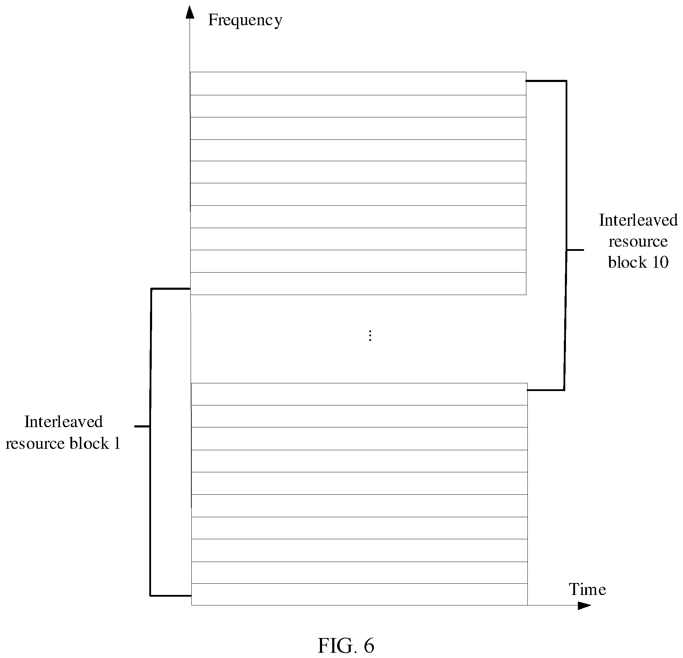

For example, it is assumed that after the first terminal device accesses the channel based on an LBT process, the obtained frequency domain resource includes 10 interleaved resource blocks (as shown in FIG. 6, one interleaved resource block may be corresponding to a transmission resource of one second terminal device), and a determined COT includes six slots.

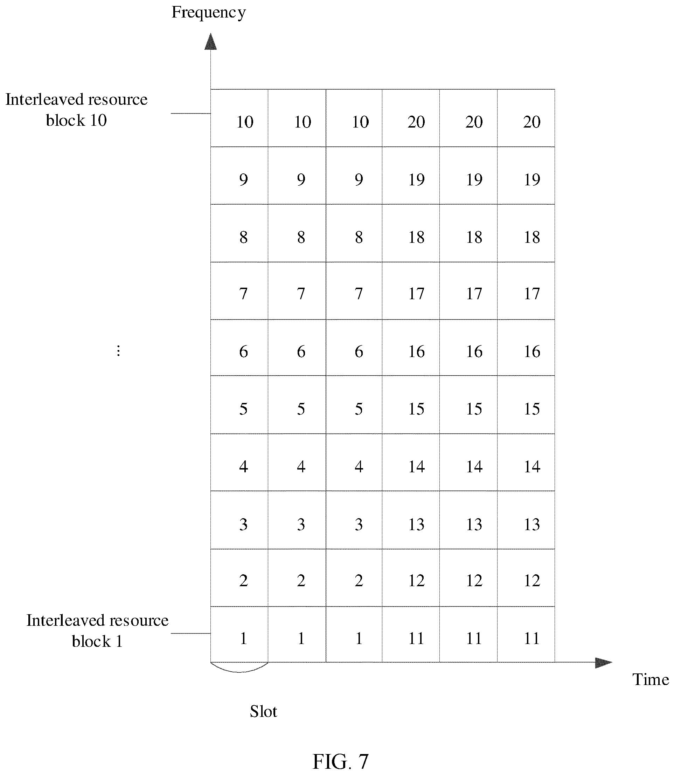

In this case, for a time domain indication, as shown in FIG. 7 (numbers in blocks in the figure are respectively corresponding to an ith second terminal device), the first terminal device may send first indication information 111000 to the first to the tenth second terminal devices, to indicate the first to the tenth second terminal devices to send sidelink information in first three slots of the COT; and send first indication information 000111 to the eleventh to the twentieth second terminal devices, to indicate the eleventh to the twentieth second terminal devices to send sidelink information in last three slots of the COT.

Similarly, for a frequency domain indication, because each slot includes 10 interleaved resource blocks, a used interleaved resource block further needs to be indicated to the 20 second terminal devices. The first second terminal device shown in FIG. 7 is used as an example. The first terminal device may send second indication information 1000000000 to the first second terminal device, to indicate the first second terminal device to use an interleaved resource block 1 in the 10 interleaved resource blocks. In this case, when 1000000000 is received, the first second terminal device may send sidelink information on the interleaved resource block 1.

It should be noted herein that the 20 second terminal devices in this embodiment are merely an example, and do not constitute a limitation on this application.

It may be further understood that, when the first terminal device determines the sidelink resource for performing sidelink communication with the second terminal device, in addition to the manner of indicating the sidelink resource to the second terminal device, the first terminal device may further determine the sidelink resource together with the second terminal device according to a predefined rule.

The following describes a possible implementation in which the first terminal device and the second terminal device determine the sidelink resource together according to a predefined rule in the unicast scenario.

It should be understood that the foregoing predefined rule is a rule that both the first terminal device and the second terminal device need to comply with. To be specific, when the first terminal device determines the sidelink resource according to the foregoing rule, the second terminal device also determines the sidelink resource according to the foregoing rule. The predefined rule may be an implicit rule that does not need an explicit indication.

Similar to that the first terminal device indicates the time domain resource and the frequency domain resource to the second terminal device, when determining the sidelink resource according to the predefined rule, the first terminal device and the second terminal device also need to separately determine the time domain resource and the frequency domain resource.

For example, a predefined rule for the first terminal device and the second terminal device to determine the time domain resource is: determining, based on one or more of an identifier of the first terminal device, an identifier of the second terminal device, and/or a quantity of terminal devices included in a terminal device set, one or more time units occupied by the sidelink resource in the channel occupancy time. The terminal device set includes the second terminal device, or the terminal device set includes the second terminal device and the first terminal device.

The terminal device set includes all terminal devices that need to send sidelink information. The terminal device set may include the first terminal device, or may not include the first terminal device. When the first terminal device is included, it is considered that the first terminal device needs to determine a sidelink resource for the first terminal device. When the first terminal device is not included, it may be considered that the first terminal device does not need to send sidelink information, and mainly determines a sidelink resource for each second terminal device in the terminal device set.

For example, the first terminal device is not included. It may be understood that, when there are a plurality of second terminal devices that perform sidelink communication with the first terminal device, if a time domain resource needs to be determined for each of the second terminal devices, a collision between time domain resources selected for the plurality of second terminal devices needs to be avoided.

Therefore, in this embodiment, the one or more time units occupied by the sidelink resource in the channel occupancy time may be determined based on the one or more of the identifier of the first terminal device, the identifier of the second terminal device, and/or the quantity of terminal devices included in the terminal device set.

It should be understood that the identifier of the first terminal device and the identifier of the second terminal device may be used to distinguish between different terminal devices.

For example, if there are 10 terminal devices in the terminal device set to which the first terminal device and the second terminal device belong, index values of the 10 terminal devices in the terminal device set may be used as identifiers.

It may be understood that, for the first terminal device and the second terminal device, the time domain resource in the sidelink resource determined by the first terminal device and the second terminal device may occupy only one time unit or a plurality of time units of the COT.

It should be noted herein that a specific format of the time unit is not limited in this embodiment of this application. For example, the time unit may be a mini-slot, a slot, or a symbol.

In a possible implementation, the first terminal device and the second terminal device may determine, based on a value obtained when the identifier of the first terminal device and/or the identifier of the second terminal device modulo a quantity of time units included in the channel occupancy time, a time unit for the sidelink resource in the channel occupancy time.

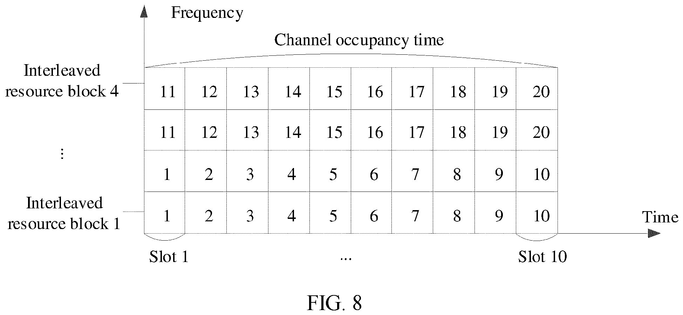

In an example, as shown in FIG. 8, it is assumed that the COT includes 10 slots, the terminal device set does not include the first terminal device, and all 20 second terminal devices perform unicast transmission. In this case, when determining a time domain resource used by the second terminal device according to the predefined rule, the first terminal device and the second terminal device may use an index value of each second terminal device in the 20 terminal devices as an identifier to modulo the quantity of time units included in the channel occupancy time, to determine the time unit for the sidelink resource in the channel occupancy time. To be specific, the first to the tenth second terminal devices are sequentially corresponding to slots 1 to 10 after identifiers of the first to the tenth second terminal devices modulo 10, and the eleventh to the twentieth second terminal devices are also sequentially corresponding to the slots 1 to 10 after identifiers of the eleventh to the twentieth second terminal devices modulo 10.

It should be noted herein that the foregoing example is merely an example in which the second terminal device performs unicast transmission to the first terminal device. During actual application, the first terminal device may alternatively perform unicast transmission to the second terminal device. In this case, an index value of the first terminal device in the terminal device set may be used as an identifier to modulo a quantity of time units included in the channel occupancy time, to determine a time unit for the sidelink resource in the channel occupancy time. A principle is the same as that in the foregoing example. Details are not described herein again.

Similarly, a predefined rule for the first terminal device and the second terminal device to determine a frequency domain resource is as follows: The first terminal device and the second terminal device determine, based on one or more of the identifier of the first terminal device, the identifier of the second terminal device, and/or the quantity of terminal devices included in the terminal device set, a frequency unit occupied by the sidelink resource in one time unit. The terminal device set includes the second terminal device, or the terminal device set includes the second terminal device and the first terminal device.

A specific form of the frequency unit is not limited in this embodiment of this application. For example, the frequency unit may be a sub-channel, or may be an interleaved resource block.

It should be noted herein that, for detailed descriptions of the identifier of the first terminal device and the identifier of the second terminal device in this implementation, refer to the foregoing embodiment of this application. Details are not described herein again.

In a possible implementation, the first terminal device and the second terminal device determine, based on a value obtained when the identifier of the first terminal device and/or the identifier of the second terminal device modulo a quantity of frequency units included in one time unit, the frequency unit occupied by the sidelink resource in the time unit.

For example, in FIG. 7, each time unit includes 10 interleaved resource blocks. In this case, if all 20 second terminal devices perform unicast transmission, as shown in FIG. 7, for the first terminal device and the second terminal device, the frequency unit may be determined based on the value obtained when the identifier of the second terminal device modulo the quantity of frequency units included in one time unit. To be specific, the first to the tenth second terminal devices are sequentially corresponding to interleaved resource blocks 1 to 10 after identifiers of the first to the tenth second terminal devices modulo 10, and the eleventh to the twentieth second terminal devices are also sequentially corresponding to the interleaved resource blocks 1 to 10 after identifiers of the eleventh to the twentieth second terminal devices modulo 10.

In an optional embodiment, the identifier of the first terminal device is determined based on an index of the first terminal device in the terminal device set, the identifier of the second terminal device is determined based on an index of the second terminal device in the terminal device set, and the terminal device set includes the second terminal device, or the terminal device set includes the second terminal device and the first terminal device.

For example, when the terminal device set includes the second terminal device, it is assumed that the terminal device set includes five second terminal devices. In this case, the five second terminal devices may be respectively referred to as a terminal device 1, a terminal device 2, a terminal device 3, a terminal device 4, and a terminal device 5. It may be considered that 1 is an index of the terminal device 1, 2 is an index of the terminal device 2, 3 is an index of the terminal device 3, 4 is an index of the terminal device 4, and 5 is an index of the terminal device 5. In this case, the identifier of the second terminal device may be determined based on the index of the second terminal device in the terminal device set. For example, the identifier of the second terminal device is equal to the index, or is equal to the index number divided by a quantity of all terminal devices included in the terminal device set. This is not limited in this embodiment of this application.

For example, when the terminal device set includes the first terminal device, it is assumed that the terminal device set includes a total of five terminal devices. In this case, the five terminal devices may be respectively referred to as a terminal device 1, a terminal device 2, a terminal device 3, a terminal device 4, and a terminal device 5. It may be considered that 1 is an index of the terminal device 1, 2 is an index of the terminal device 2, 3 is an index of the terminal device 3, 4 is an index of the terminal device 4, and 5 is an index of the terminal device 5. In this case, it is assumed that the terminal device 3 represents the first terminal device. In this case, the identifier of the first terminal device may be determined by the index of the first terminal device in the terminal device set. For example, the identifier of the first terminal device is equal to the index, or is equal to the index number divided by a quantity of all terminal devices included in the terminal device set.

Optionally, when the first terminal device and the second terminal device determine the sidelink resource according to the predefined rule, a time-frequency resource of the second terminal device may be determined in an order of indexes of second terminal devices included in a same sub-channel or interleaved resource block.

For example, it is assumed that a quantity of second terminal devices included in the sub-channel or the interlaced resource block is K. In this case, when sidelink resources are determined for the second terminal devices according to the predefined rule, the second terminal devices may be sorted in an order of indexes or in a reverse order, and each second terminal device is sequentially corresponding to one time unit. Alternatively, time units included in the channel occupancy time are divided into Y groups, and each second terminal device is corresponding to one group of time units. The tenth second terminal device and the twentieth second terminal device in FIG. 7 are used as an example. The interleaved resource block 10 includes K=2 second terminal devices, and the channel occupancy time includes a total of six slots. In this case, the tenth second terminal device is corresponding to slots 1, 2, and 3, and the twentieth second terminal device is corresponding to slots 4, 5, and 6.

Similarly, it is assumed that a quantity of second terminal devices included in a same time unit is K. In this case, the second terminal devices are sorted in an order of indexes or in a reverse order, and each second terminal device is sequentially corresponding to one sub-channel or interleaved resource block. Alternatively, sub-channels or interleaved resource blocks included in a channel are divided into Y groups, and each second terminal device occupies one group. When the second terminal devices included in the time unit are sorted in the order of the indexes or in the reverse order, group indexes of sub-channels or interleaved resource blocks occupied by the second terminal devices are in a one-to-one correspondence with the indexes of sorted second terminal devices. FIG. 8 is used as an example. The slot 1 includes the first second terminal device and the eleventh second terminal device, and a total bandwidth includes four interleaved resource blocks. In this case, the first second terminal device is corresponding to an interleaved resource block 1 and an interleaved resource block 2, and the eleventh second terminal device is corresponding to an interleaved resource block 3 and an interleaved resource block 4.

This embodiment of this application provides a method in which the first terminal device determines the sidelink resource by using the indication information according to the predefined rule in the unicast scenario, to provide sidelink resources for a plurality of second terminal devices, so that the plurality of second terminal devices can perform sending simultaneously, and a transmission delay is reduced. In addition, the manner according to the predefined rule may reduce overheads of signaling transmission, reduce a level of interference in a communication system, and improve transmission reliability of the communication system.

The following describes a manner in which a first terminal device indicates a sidelink resource by using indication information and a manner in which the first terminal device and a second terminal device determine a sidelink resource according to a predefined rule in a multicast scenario in this application.

First, a manner in which the first terminal device indicates the sidelink resource to the second terminal device in a multicast transmission scenario is described.

It may be understood that, for multicast transmission, if a terminal device in a group sends information, it is required that all remaining terminal devices in the group can receive the information. To be specific, if a terminal device needs to send sidelink information, the sidelink information needs to be received by all other remaining terminal devices. In this case, if a sidelink resource is determined for each terminal device in the group in a frequency division multiplexing manner, due to a half-duplex limitation (one terminal device cannot simultaneously send and receive data), terminal devices that simultaneously send information cannot receive the information from each other.

For example, it is assumed that there are a total of five terminal devices in one group, namely, a terminal device 1, a terminal device 2, a terminal device 3, a terminal device 4, and a terminal device 5. In this case, for multicast transmission, if any terminal device in the group sends sidelink information, the remaining terminal devices need to receive the sidelink information. In this case, if the terminal device 1 and the terminal device 2 perform sending simultaneously, due to the half-duplex limitation, the terminal device 1 cannot receive sidelink information sent by the terminal device 2, and the terminal device 2 cannot receive sidelink information sent by the terminal device 1.

Based on this, in this case, a solution is as follows. Terminal devices that simultaneously send sidelink information each send the sidelink information for a plurality of times. In this way, another terminal device that has not received the sidelink information can receive the sidelink information once, and therefore, multicast transmission may be met.

It may be further understood that, when the terminal devices that simultaneously send sidelink information each send the sidelink information for a plurality of times, a level of interference in a communication system may be reduced.

The terminal device 1, the terminal device 2, the terminal device 3, the terminal device 4, and the terminal device 5 are still used as examples for description. It is assumed that the terminal device 1 and the terminal device 2 simultaneously send sidelink information. The terminal device 3, the terminal device 4, and the terminal device 5 may all receive the sidelink information sent by the terminal device 1 and the terminal device 2. However, the terminal device 2 should originally receive the sidelink information at a moment at which the terminal device 1 sends data. However, because the terminal device 2 sends the sidelink information at the moment, due to the half-duplex limitation, the terminal device 2 cannot receive the sidelink information sent by the terminal device 1. In this case, to enable the terminal device 2 to receive the sidelink information sent by the terminal device 1, the terminal device 1 may send the sidelink information again at a next moment. In this way, because the terminal device 2 does not send sidelink information at the next moment, the terminal device 2 may receive the sidelink information sent by the device 1. To be specific, this avoids that the terminal device 2 cannot receive the sidelink information sent by the terminal device 1, and reduces a level of interference in a communication system.

Similarly, the terminal device 1 should actually receive the sidelink information at a moment at which the terminal device 2 sends the sidelink information. However, because the terminal device 1 sends the sidelink information at the moment, the terminal device 1 cannot receive the sidelink information sent by the terminal device 2. In this case, to enable the terminal device 1 to receive data sent by the terminal device 2, the terminal device 2 may send the data again at another moment. In this way, because the terminal device 1 does not perform sending at the moment, the terminal device 1 may receive the sidelink information sent by the terminal device 2. To be specific, this avoids that the terminal device 1 cannot receive the sidelink information sent by the terminal device 2, and reduces a level of interference in a communication system.

Therefore, in multicast, if a time domain resource is to be indicated, it needs to be ensured that all remaining terminal devices in a group may receive the information.

It should be understood that, it is assumed that one time window includes n time units. If one terminal device performs transmission for k times in the time window, the terminal device may select $C_n^k$ modes (a mode is also referred to as a transmission mode in this embodiment) during transmission. It may be understood that if one transmission mode is corresponding to one terminal device, the time window may support transmission of a total of $C_n^k$ terminal

$$k = \left\lfloor \frac{n}{2} \right\rfloor$$

devices. When                    , a maximum quantity of terminal devices may be supported. In this case, a quantity of terminal devices that may be simultaneously supported in each time unit in the time window is $C_n^{\frac{n}{2}} * \left( \lfloor n/2 \rfloor / n \right)$ . It should be noted herein that for a principle and a detailed derivation process of this part, refer to related technical descriptions. Details are not described herein again.

For example, Table 1 shows a quantity of terminal devices supported by a time window and a quantity of terminal devices that can be simultaneously supported in each time unit in the time window in different time windows in a multicast transmission case. For example, when a time window is 5, a maximum of 10 terminal devices may be supported to perform multicast transmission, and transmission of four terminal devices may be simultaneously supported in each time unit included in the time window.

**Table 1**

| Quantity of terminal devices | Quantity of time units included in the time window | Quantity of transmission modes | Quantity of terminal devices supported in each time unit |
|---|---|---|---|
| 1 | 1 | 1 | 1 |
| 2 | 2 | 2 | 1 |
| 3 | 3 | 3 | 1 |
| 4-6 | 4 | 6 | 3 |
| 7-10 | 5 | 10 | 4 |
| 11-20 | 6 | 20 | 10 |
| 21-35 | 7 | 35 | 15 |
| 36-70 | 8 | 70 | 35 |
| 71-126 | 9 | 126 | 56 |
| 127-252 | 10 | 252 | 126 |

The quantity of transmission modes is equal to a maximum quantity of terminal devices whose transmission is supported in the time window. For example, when the quantity of time units included in the time window is equal to 8, and the maximum quantity of terminal devices whose simultaneous transmission is supported in the time window is 70, the quantity of transmission modes is equal to 70.

It may be understood that one transmission mode may be corresponding to one terminal device, and different transmission modes are corresponding to different terminal devices.

It should be noted herein that Table 1 merely provides an example of a quantity of terminal devices that may be supported in some different time windows. A correspondence between the remaining time windows and the quantity of terminal devices may be determined based on the foregoing formula. This is not limited in this embodiment of this application.

For example, the following provides transmission modes of different terminal devices during transmission in different time windows.

Table 2 shows transmission modes of terminal devices whose transmission may be supported when the time window is 4.

**Table 2**

| Index number | Transmission mode | Index number | Transmission mode | Index number | Transmission mode |
|---|---|---|---|---|---|
| 1 | 1100 | 3 | 1001 | 5 | 0101 |

(continued)

| Index number | Transmission mode | Index number | Transmission mode | Index number | Transmission mode |
|---|---|---|---|---|---|
| 2 | 1010 | 4 | 0110 | 6 | 0011 |

Table 3 shows transmission modes of terminal devices whose transmission may be supported when the time window is 5.

**Table 3**

| Index number | Transmission mode | Index number | Transmission mode | Index number | Transmission mode | Index number | Transmission mode |
|---|---|---|---|---|---|---|---|
| 1 | 11000 | 4 | 10001 | 7 | 01001 | 10 | 00011 |
| 2 | 10100 | 5 | 01100 | 8 | 00110 | | |
| 3 | 10010 | 6 | 01010 | 9 | 00101 | | |

Table 4 shows transmission modes of terminal devices whose transmission may be supported when the time window is 6.

**Table 4**

| Index number | Transmission mode | Index number | Transmission mode | Index number | Transmission mode | Index number | Transmission mode |
|---|---|---|---|---|---|---|---|
| 1 | 111000 | 6 | 101010 | 11 | 011100 | 16 | 010011 |
| 2 | 110100 | 7 | 101001 | 12 | 011010 | 17 | 001110 |
| 3 | 110010 | 8 | 100110 | 13 | 011001 | 18 | 001101 |
| 4 | 110001 | 9 | 100101 | 14 | 010110 | 19 | 001011 |
| 5 | 101100 | 10 | 100011 | 15 | 010101 | 20 | 000111 |

Table 5 shows transmission modes of terminal devices whose transmission may be supported when the time window is 7.

**Table 5**

| Index number | Transmission mode | Index number | Transmission mode | Index number | Transmission mode | Index number | Transmission mode |
|---|---|---|---|---|---|---|---|
| 1 | 1110000 | 10 | 1001100 | 19 | 0110001 | 28 | 0011001 |
| 2 | 1101000 | 11 | 1001010 | 20 | 0101100 | 29 | 0010110 |
| 3 | 1100100 | 12 | 1001001 | 21 | 0101010 | 30 | 0010101 |
| 4 | 1100010 | 13 | 1000110 | 22 | 0101001 | 31 | 0010011 |
| 5 | 1100001 | 14 | 1000101 | 23 | 0100110 | 32 | 0001110 |
| 6 | 1011000 | 15 | 1000011 | 24 | 0100101 | 33 | 0001101 |
| 7 | 1010100 | 16 | 0111000 | 25 | 0100011 | 34 | 0001011 |
| 8 | 1010010 | 17 | 0110100 | 26 | 0011100 | 35 | 0000111 |
| 9 | 1010001 | 18 | 0110010 | 27 | 0011010 | | |

Table 6 shows transmission modes of terminal devices whose transmission may be supported when the time window is 8.

**Table 6**

| Index number | Transmission mode | Index number | Transmission mode | Index number | Transmission mode | Index number | Transmission mode |
|---|---|---|---|---|---|---|---|
| 1 | 11110000 | 19 | 11001010 | 37 | 01101010 | 55 | 10001011 |
| 2 | 11101000 | 20 | 11001001 | 38 | 01101001 | 56 | 10001101 |
| 3 | 11100100 | 21 | 11000110 | 39 | 01100110 | 57 | 10001110 |
| 4 | 11100010 | 22 | 11000101 | 40 | 01100101 | 58 | 01000111 |
| 5 | 11100001 | 23 | 11000011 | 41 | 01100011 | 59 | 01001011 |
| 6 | 11011000 | 24 | 10101100 | 42 | 01011100 | 60 | 01001101 |
| 7 | 11010100 | 25 | 10101010 | 43 | 01011010 | 61 | 01001110 |
| 8 | 11010010 | 26 | 10101001 | 44 | 01011001 | 62 | 00100111 |
| 9 | 11010001 | 27 | 10100110 | 45 | 01010110 | 63 | 00101011 |
| 10 | 10111000 | 28 | 10100101 | 46 | 01010101 | 64 | 00101101 |
| 11 | 10110100 | 29 | 10100011 | 47 | 01010011 | 65 | 00101110 |
| 12 | 10110010 | 30 | 10011100 | 48 | 00111100 | 66 | 00010111 |
| 13 | 10110001 | 31 | 10011010 | 49 | 00111010 | 67 | 00011011 |
| 14 | 01111000 | 32 | 10011001 | 50 | 00111001 | 68 | 00011101 |
| 15 | 01110100 | 33 | 10010110 | 51 | 00110110 | 69 | 00011110 |
| 16 | 01110010 | 34 | 10010101 | 52 | 00110101 | 70 | 00001111 |
| 17 | 01110001 | 35 | 10010011 | 53 | 00110011 | | |
| 18 | 11001100 | 36 | 01101100 | 54 | 10000111 | | |

Each index number (which may be considered as an identifier of a terminal device) in Table 2 to Table 6 is corresponding to one terminal device.

For example, the time window is equal to 6. When the time window is equal to 6, 20 terminal devices may be supported in performing sidelink communication. A transmission mode corresponding to a first terminal device is 111000, indicating that the terminal device performs transmission in first three time units of six time units included in the time window. For another example, a transmission mode corresponding to a twentieth second terminal device is 000111, indicating that the second terminal device performs transmission in last three time units of six time units included in the time window.

It should be understood that the "transmission mode" described in this application is merely an example name, and may represent a bitmap corresponding to a length of the time window. One transmission mode may indicate one or more time units occupied by a sidelink resource in the time window. The transmission mode may further be referred to as another name. This is not limited in this application.

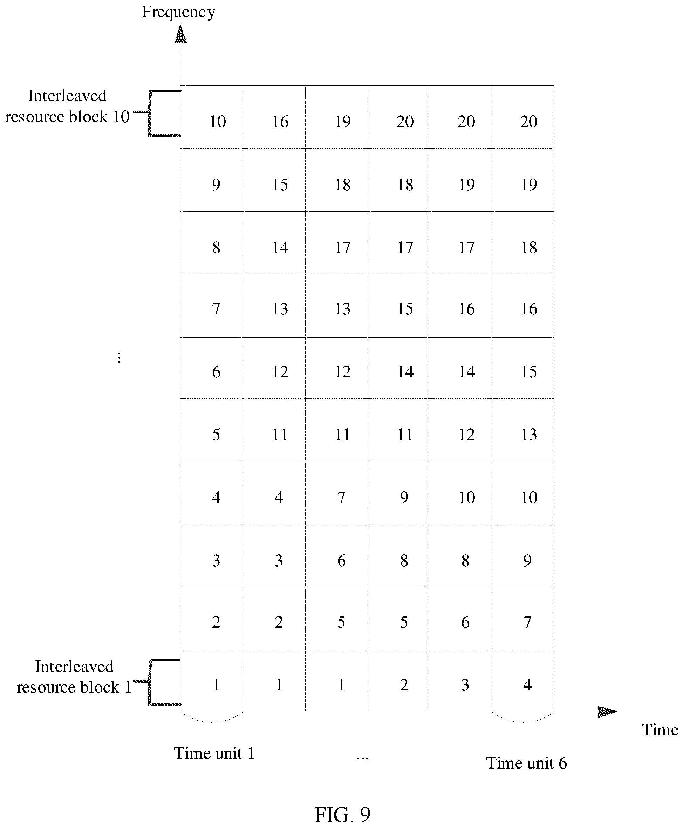

In this case, the first terminal device may indicate a time domain resource in a bitmap manner. As shown in FIG. 9, a COT includes a total of six time units, a number i in each block represents an $i^{th}$ terminal device, and a time domain resource allocated to a first terminal device may be indicated by using 111000. To be specific, the first terminal device performs sending in first three time units of the six time units. A time domain resource allocated to a twentieth terminal device may be indicated by using 000111. To be specific, the twentieth terminal device performs sending in last three time units of the six time units. The 20 terminal devices may perform sending in the six time units based on the time domain resource pattern shown in FIG. 9, and each terminal device performs sending three times in the six time units. In this manner, a half-duplex problem may be effectively avoided.

Similarly, the first terminal device may further indicate a frequency domain resource in a bitmap manner. For example, after the first terminal device accesses a channel based on an LBT process, an obtained frequency domain resource includes a total of 10 sub-channels or interleaved resource blocks. FIG. 9 is still used as an example. A total frequency band includes a total of 10 interleaved resource blocks. When the first terminal device sends indication information of the frequency domain resource, for example, sends frequency domain indication information to the first terminal device, to meet multicast transmission, the first terminal device performs transmission three times in the six time units. Therefore, when the first terminal device sends the frequency domain indication information to the first terminal device, the first terminal device needs to indicate by using three groups of bitmaps. As shown in FIG. 9, when the first terminal device indicates the frequency domain resource to the first terminal device, the first terminal device may indicate 1000000000 in a first time unit, indicate 1000000000 in a second time unit, and indicate 1000000000 in a third time unit, which respectively indicates that the first terminal device performs sending on a first interleaved resource block in the first time unit, a first interleaved resource block in the second time unit, and a first interleaved resource block in the third time unit.

The following describes a method for determining the sidelink resource between the first terminal device and the second terminal device according to the predefined rule in the multicast transmission scenario.

In a possible implementation, the predefined rule for the first terminal device and the second terminal device to determine the time domain resource is: determining, based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units included in the channel occupancy time, and/or a quantity of terminal devices included in a terminal device set, one or more time units occupied by the sidelink resource in the channel occupancy time.

It may be understood that, for multicast transmission, when a sidelink resource is determined for each terminal device in the terminal devices, all remaining terminal devices in the group need to receive sidelink information sent by the terminal device. Therefore, when the sidelink resource is determined based on the predefined rule, compared with unicast transmission, quantities of times of transmission of the first terminal device and the second terminal device in time units included in the channel occupancy time further need to be considered. Therefore, in this embodiment, the one or more time units occupied by the sidelink resource in the channel occupancy time are determined by using one or more of the identifier of the first terminal device, the identifier of the second terminal device, the quantity of times of transmission of the first terminal device in the channel occupancy time, the quantity of times of transmission of the second terminal device in the channel occupancy time, the quantity of time units included in the channel occupancy time, and the quantity of terminal devices included in the terminal device set.

For example, the terminal device set includes a total of N terminal devices, and the N terminal devices include one first terminal device and N-1 second terminal devices. An index value of each terminal device is in a one-to-one correspondence with an index value of a transmission mode. Specifically, the correspondence may be based on an ascending or reverse order rule. Tables 2 to 4 are used as an example. A first terminal device is corresponding to a transmission mode 1, a second terminal device is corresponding to a transmission mode 2, and so on. Alternatively, a first terminal device is corresponding to a transmission mode 20, a second terminal device is corresponding to a transmission mode 19, and so on.

Similarly, for the frequency domain resource, in a possible implementation, a predefined rule between the first terminal device and the second terminal device is: determining, based on one or more of the identifier of the first terminal device, the identifier of the second terminal device, the one or more time units occupied by the sidelink resource in the channel occupancy time, a quantity of frequency units included in each time unit, and/or the quantity of terminal devices included in the terminal device set, one or more frequency units occupied by the sidelink resource in the time unit.

For example, the terminal device set includes a total of N terminal devices, and the N terminal devices include one first terminal device and N-1 second terminal devices. After a time unit in which each terminal device sends sidelink information is determined, a sub-channel or an interleaved resource block occupied by the frequency domain resource in each time unit may be a first unallocated sub-channel or interleaved resource block in the time unit in an ascending or descending order.

FIG. 9 is used as an example. An index 1 of a transmission mode is corresponding to first three time units, and first unallocated interleaved resource blocks in the first three time units are interleaved resource blocks 1, 1, and 1, that is, a frequency domain pattern 1. An index 2 of the transmission mode is corresponding to time units 1, 2, and 4. First interleaved resource blocks in the first time unit and the second time unit are occupied by the frequency domain pattern 1. Therefore, the time unit 1 and the time unit 2 are respectively corresponding to interleaved resource blocks 2 and 2, and the time unit 4 is corresponding to the interleaved resource block 1, that is, a frequency domain pattern 2. An index 3 of the transmission mode is corresponding to time units 1, 2, and 5. First two interleaved resource blocks in the first time unit and the second time unit are occupied by the frequency domain pattern 1 and the frequency pattern 2. Therefore, the time unit 1 and the time unit 2 are respectively corresponding to interleaved resource blocks 3 and 3, and the time unit 5 is corresponding to the interleaved resource block 1. By analogy, frequency patterns in Table 2 to Table 4 may be obtained.

It should be noted herein that determining the frequency domain pattern in FIG. 9 is merely an example, and does not constitute a limitation on this application. For example, a sub-channel or an interleaved resource block occupied by the frequency domain resource in each time unit may be every Z+1 unallocated sub-channel or interleaved resource block in the time unit in an ascending or descending order, where Z is a positive integer.

For detailed descriptions of the identifier of the first terminal device, the identifier of the second terminal device, and the quantity of terminal devices included in the terminal device set, refer to the unicast transmission embodiment.

Details are not described herein again.

Optionally, because a quantity of users scheduled in each time unit is $C_n^{\frac{n}{2}}*\left(\lfloor n/2 \rfloor / n\right)$, when a quantity of sub-channels or a quantity of interleaved resource blocks included in an accessed channel is less than a quantity of scheduled terminal devices, the terminal devices may be divided into a plurality of groups, and a sidelink resource is determined for each group of terminal devices in the foregoing manner.

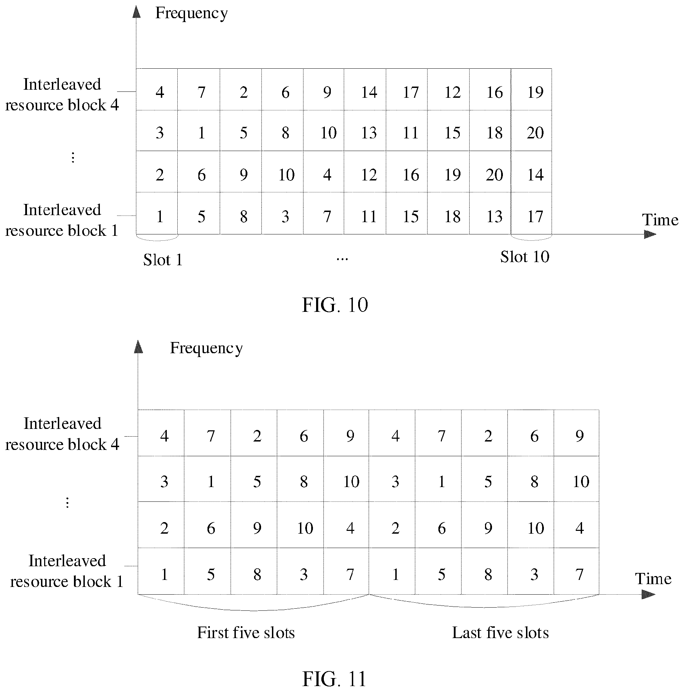

For example, the time unit is a slot. FIG. 10 shows a time-frequency resource pattern of 20 terminal devices when there are four interleaved resource blocks in a 20 M bandwidth, where one terminal device is a scheduling terminal device. According to Table 1, a time window corresponding to the 20 terminal devices includes six slots, and a quantity of users scheduled in each slot is 10. To be specific, at least 10 sub-channels or interleaved resource blocks are needed in frequency domain. Therefore, the 20 terminal devices may be divided into two groups. As shown in FIG. 10, a horizontal axis represents time, and includes 10 slots. First five slots in the 10 slots are corresponding to a first time window, and last five slots are corresponding to a second time window. A vertical axis represents frequency domain. Each interleaved resource block may be corresponding to a frequency domain resource of a terminal device. The number in each box is corresponding to the terminal device. For example, a number 1 in the box indicates a terminal device 1. Terminal devices 1 to 10 perform sending by using first five slots, and a length of a corresponding time window is 5. Terminal devices 11 to 20 perform sending by using last five slots. A time-frequency resource pattern of the first five slots is the same as that of the last five time units. In addition, each terminal device performs transmission twice in five slots. For example, the terminal device 1 performs transmission in a first slot and a second slot, and a terminal device 2 performs transmission in the first slot and a third slot.

It may be understood that, after a time window that may be used to simultaneously transmit the N terminal devices is determined, each terminal device in the group may send data in the time window, for example, send a first data packet. Further, the first terminal device may further continue to determine a same time window, to enable all terminal devices in the group to continue to send data, for example, send a second data packet.

For example, the time unit is still a slot. As shown in FIG. 11, it is assumed that 10 terminal devices are included. In this case, the 10 terminal devices may first send a first data packet in first five slots, and then send a second data packet in last five slots. A time-frequency resource pattern of the first five slots is the same as a time-frequency resource pattern of the last five slots.

It should be noted herein that the foregoing embodiment merely provides an example of a frequency domain resource pattern. This embodiment of this application is not limited to the foregoing pattern, and another pattern may alternatively be used. This is not limited in this embodiment of this application.

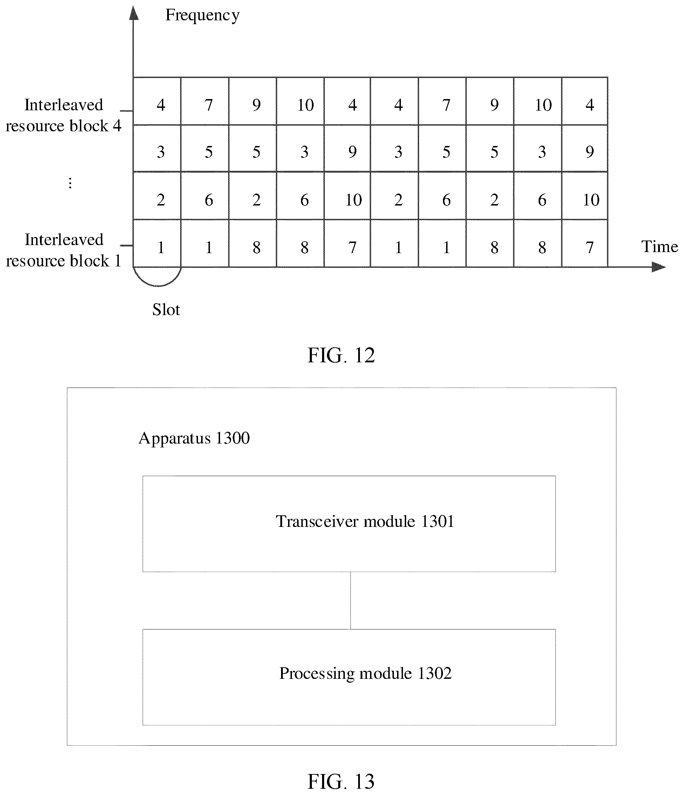

For example, the frequency domain resource pattern shown in FIG. 12 may alternatively be used. A difference between the frequency domain resource pattern and the embodiment shown in FIG. 11 lies in that division of frequency domain resources in FIG. 12 is different. For example, in FIG. 11, an interleaved resource block 1 in the first slot and an interleaved resource block 3 in the second slot are allocated to the terminal device 1. However, in FIG. 12, the interleaved resource block 1 in the first slot and an interleaved resource block 1 in the second slot are allocated to the terminal device 1.

This embodiment of this application provides a method for determining the sidelink resource by the first terminal device in the multicast scenario by using the indication information and according to the predefined rule, so that sidelink resources can be provided for a plurality of second terminal devices, the plurality of second terminal devices perform sending at the same time, and a transmission delay is reduced. In addition, the manner according to the predefined rule may reduce overheads of signaling transmission, reduce a level of interference in a communication system, and improve transmission reliability of the communication system.

FIG. 13 is a schematic diagram of a structure of a communication apparatus according to an embodiment of this application. The communication apparatus shown in FIG. 13 may be configured to perform procedures and/or steps corresponding to the first terminal device in any one of the foregoing embodiments.

As shown in FIG. 13, a communication apparatus 1300 in this embodiment includes a transceiver module 1301 and a processing module 1302.

The processing module 1302 is configured to: access a channel based on a listen before talk LBT process and determine a channel occupancy time; and determine a sidelink resource in the channel occupancy time. The transceiver module 1301 is configured to: send, on the sidelink resource, sidelink information to a second terminal device; or receive, on the sidelink resource, sidelink information from a second terminal device.

In an example, the processing module 1302 may be configured to perform the steps of determining the sidelink resource in the communication method in FIG. 3. For example, a determining module 1301 is configured to perform S302.

In another example, the transceiver module 1301 may be configured to perform the step in which the first terminal device receives, on the sidelink resource, the sidelink information sent by the second terminal device in the communication method in FIG. 3. For example, a communication module 1302 is configured to perform S303 or S504.

In a possible implementation, the transceiver module 1301 is further configured to send first indication information and/or second indication information to the second terminal device, where the first indication information indicates a time domain position of the sidelink resource, and the second indication information indicates a frequency domain position of the sidelink resource.

In a possible implementation, the first indication information includes L bits, and an $i^{th}$ bit in the L bits indicates whether the sidelink resource includes an $i^{th}$ time unit in L time units, where i=1, 2, ..., or L, and L is a positive integer.

In a possible implementation, the second indication information includes M bits, and a $j^{th}$ bit in the M bits indicates whether the sidelink resource includes a $j^{th}$ frequency unit in M frequency units, where j=1, 2, ..., or M, and M is a positive integer.

In a possible implementation, the processing module 1302 is specifically configured to: determine, based on one or more of an identifier of the first terminal device, an identifier of the second terminal device, and/or a quantity of terminal devices included in a terminal device set, one or more time units occupied by the sidelink resource in the channel occupancy time, where the terminal device set includes the second terminal device, or the terminal device set includes the second terminal device and the first terminal device.

In a possible implementation, the processing module 1302 is specifically configured to: determine, based on a value obtained when the identifier of the first terminal device and/or the identifier of the second terminal device modulo the quantity of time units included in the channel occupancy time, a time unit for the sidelink resource in the channel occupancy time.

In a possible implementation, the processing module 1302 is specifically configured to: determine, based on one or more of the identifier of the first terminal device, the identifier of the second terminal device, and/or the quantity of terminal devices included in the terminal device set, a frequency unit occupied by the sidelink resource in one time unit, where the terminal device set includes the second terminal device, or the terminal device set includes the second terminal device and the first terminal device.

In a possible implementation, the processing module 1302 is specifically configured to: determine, based on a value obtained after the identifier of the first terminal device and/or the identifier of the second terminal device modulo a quantity of frequency units included in one time unit, the frequency unit occupied by the sidelink resource in the time unit.

In a possible implementation, the identifier of the first terminal device is determined based on an index of the first terminal device in the terminal device set, the identifier of the second terminal device is determined based on an index of the second terminal device in the terminal device set, and the terminal device set includes the second terminal device, or the terminal device set includes the second terminal device and the first terminal device.

In a possible implementation, the processing module 1302 is specifically configured to: determine, based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units included in the channel occupancy time, and/or a quantity of terminal devices included in a terminal device set, one or more time units occupied by the sidelink resource in the channel occupancy time.

In a possible implementation, the processing module 1302 is specifically configured to: determine, based on one or more of the identifier of the first terminal device, the identifier of the second terminal device, the one or more time units occupied by the sidelink resource in the channel occupancy time, a quantity of frequency units included in each time unit, and/or the quantity of terminal devices included in the terminal device set, one or more frequency units occupied by the sidelink resource in the time unit.

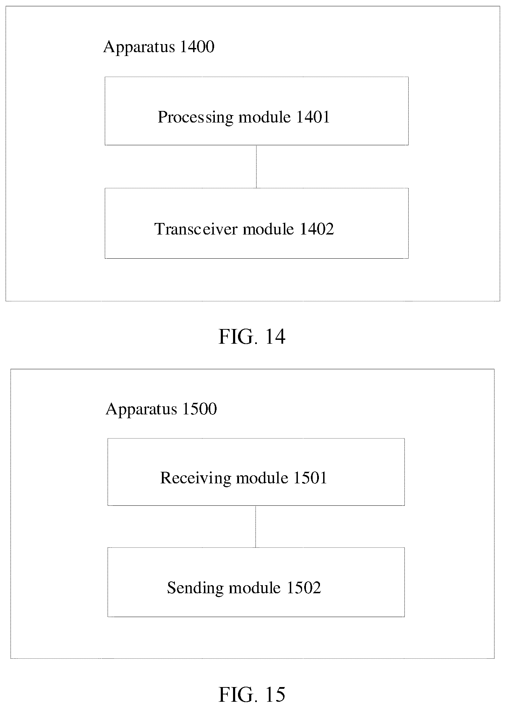

FIG. 14 is a schematic diagram of a structure of a communication apparatus according to another embodiment of this application. The communication apparatus shown in FIG. 14 may be configured to perform procedures and/or steps corresponding to the second terminal device in any one of the foregoing embodiments.

As shown in FIG. 14, a communication apparatus 1400 in this embodiment includes a processing module 1401 and a transceiver module 1402.

The processing module 1401 is configured to determine a sidelink resource in a channel occupancy time, where the channel occupancy time is determined by a first terminal device.

The transceiver module 1402 is configured to: send, on the sidelink resource, sidelink information to the first terminal device; or receive, on the sidelink resource, sidelink information from the first terminal device.

In a possible implementation, the processing module 1401 is specifically configured to: determine, based on one or more of an identifier of the first terminal device, an identifier of the second terminal device, and/or a quantity of terminal devices included in a terminal device set, one or more time units occupied by the sidelink resource in the channel occupancy time, where the terminal device set includes the second terminal device, or the terminal device set includes the second terminal device and the first terminal device.

In a possible implementation, the processing module 1401 is specifically configured to: determine, based on a value obtained when the identifier of the first terminal device and/or the identifier of the second terminal device modulo the quantity of time units included in the channel occupancy time, a time unit for the sidelink resource in the channel occupancy time.

In a possible implementation, the processing module 1401 is specifically configured to: determine, based on one or more of the identifier of the first terminal device, the identifier of the second terminal device, and/or the quantity of terminal devices included in the terminal device set, a frequency unit occupied by the sidelink resource in one time unit, where the terminal device set includes the second terminal device, or the terminal device set includes the second terminal device and the first terminal device.

In a possible implementation, the processing module 1401 is specifically configured to: determine, based on a value obtained after the identifier of the first terminal device and/or the identifier of the second terminal device modulo a quantity of frequency units included in one time unit, the frequency unit occupied by the sidelink resource in the time unit.

In a possible implementation, the identifier of the first terminal device is determined based on an index of the first terminal device in the terminal device set, the identifier of the second terminal device is determined based on an index of the second terminal device in the terminal device set, and the terminal device set includes the second terminal device, or the terminal device set includes the second terminal device and the first terminal device.

In a possible implementation, the processing module 1401 is specifically configured to: determine, based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units included in the channel occupancy time, and/or a quantity of terminal devices included in a terminal device set, one or more time units occupied by the sidelink resource in the channel occupancy time.

In a possible implementation, the processing module 1401 is specifically configured to: determine, based on one or more of the identifier of the first terminal device, the identifier of the second terminal device, the one or more time units occupied by the sidelink resource in the channel occupancy time, a quantity of frequency units included in each time unit, and/or the quantity of terminal devices included in the terminal device set, one or more frequency units occupied by the sidelink resource in the time unit.

FIG. 15 is a schematic diagram of a structure of a communication apparatus according to still another embodiment of this application. The communication apparatus shown in FIG. 15 may be configured to perform procedures and/or steps corresponding to the second terminal device in any one of the foregoing embodiments.

As shown in FIG. 15, a communication apparatus 1500 in this embodiment includes a receiving module 1501 and a sending module 1502.

The receiving module 1501 is configured to: receive first indication information and/or second indication information from a first terminal device; and receive, on a sidelink resource, sidelink information from the first terminal device, where the first indication information indicates a time domain position of the sidelink resource, the second indication information indicates a frequency domain position of the sidelink resource, and the sidelink resource is determined by the first terminal device in a channel occupancy time. The sending module 1502 is configured to: send, on the sidelink resource, sidelink information to the first terminal device.

In an example, the receiving module 1501 may be configured to perform the step in which the second terminal device receives indication information in the communication method. For example, the receiving module 1501 is configured to receive the indication information in S503.

In another example, the sending module 1502 may be configured to perform the step in which the second terminal device sends the sidelink information on the sidelink resource in the communication method. For example, the transceiver module 1501 is configured to perform S504.

In a possible implementation, the first indication information includes L bits, and an $i^{th}$ bit in the L bits indicates whether the sidelink resource includes an $i^{th}$ slot in L time units, where i=1, 2, ..., or L, and L is a positive integer.

In a possible implementation, the second indication information includes M bits, and a $j^{th}$ bit in the M bits indicates whether the sidelink resource includes a $j^{th}$ frequency unit in M frequency units, where j=1, 2, ..., or M, and M is a positive integer.

It should be noted that the apparatus 1300, the apparatus 1400, or the apparatus 1500 in the foregoing embodiments may be a terminal device, or may be a chip applied to a terminal device, or another combined device or component that may implement a function of the terminal device. When the apparatus is the terminal device, the transceiver module may be a transmitter and a receiver, or an integrated transceiver, and may include an antenna, a radio frequency circuit, and the like. The processing unit may be a processor, for example, a baseband chip, or the like. When the communication apparatus is the component that has the function of the terminal device, the transceiver module may be a radio frequency unit, and the processing module may be a processor. When the communication apparatus is a chip system, the transceiver module may be an input/output interface of the chip system, and the processing unit may be a processor of the chip system, for example, a central processing unit (central processing unit, CPU), or the like.

All or some of the foregoing embodiments may be implemented by using software, hardware, firmware, or any other combination thereof. When the software is used to implement the embodiments, all or some of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may exist alone or in parallel.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   accessing, by a first terminal device based on a listen before talk LBT process, a channel and determining a channel occupancy time;
   determining, by the first terminal device, a sidelink resource in the channel occupancy time; and
   sending, by the first terminal device on the sidelink resource, sidelink information to a second terminal device, or receiving, on the sidelink resource, sidelink information from the second terminal device.

2. The method according to claim 1, wherein the method further comprises:
   sending, by the first terminal device, first indication information and/or second indication information to the second terminal device, wherein the first indication information indicates a time domain position of the sidelink resource, and the second indication information indicates a frequency domain position of the sidelink resource.

3. The method according to claim 2, wherein the first indication information comprises L bits, and an $i^{th}$ bit in the L bits indicates whether the sidelink resource comprises an $i^{th}$ time unit in L time units, wherein i=1, 2, ..., or L, and L is a positive integer.

4. The method according to claim 2 or 3, wherein the second indication information comprises M bits, and a $j^{th}$ bit in the M bits indicates whether the sidelink resource comprises a $j^{th}$ frequency unit in M frequency units, wherein j=1, 2, ..., or M, and M is a positive integer.

5. The method according to any one of claims 1 to 4, wherein the determining, by the first terminal device, a sidelink resource in the channel occupancy time comprises:

   determining, by the first terminal device based on one or more of an identifier of the first terminal device, an identifier of the second terminal device, and/or a quantity of terminal devices comprised in a terminal device set, one or more time units occupied by the sidelink resource in the channel occupancy time, wherein
   the terminal device set comprises the second terminal device, or the terminal device set comprises the second terminal device and the first terminal device.

6. The method according to claim 5, wherein the determining, by the first terminal device, a sidelink resource in the channel occupancy time comprises:
   determining, by the first terminal device based on a value obtained when the identifier of the first terminal device and/or the identifier of the second terminal device modulo a quantity of time units comprised in the channel occupancy time, a time unit for the sidelink resource in the channel occupancy time.

7. The method according to any one of claims 1 to 6, wherein the determining, by the first terminal device, a sidelink resource in the channel occupancy time comprises:

   determining, by the first terminal device based on one or more of the identifier of the first terminal device, the identifier of the second terminal device, and/or the quantity of terminal devices comprised in the terminal device set, a frequency unit occupied by the sidelink resource in one time unit, wherein
   the terminal device set comprises the second terminal device, or the terminal device set comprises the second terminal device and the first terminal device.

8. The method according to claim 7, wherein the determining, by the first terminal device, a sidelink resource in the channel occupancy time comprises:
   determining, by the first terminal device based on a value obtained when the identifier of the first terminal device and/or the identifier of the second terminal device modulo a quantity of frequency units comprised in one time unit, the frequency unit occupied by the sidelink resource in the time unit.

9. The method according to any one of claims 5 to 8, wherein the identifier of the first terminal device is determined based on an index of the first terminal device in the terminal device set, the identifier of the second terminal device is determined based on an index of the second terminal device in the terminal device set, and the terminal device set comprises the second terminal device, or the terminal device set comprises the second terminal device and the first terminal device.

10. The method according to any one of claims 1 to 4, wherein the determining, by the first terminal device, a sidelink resource in the channel occupancy time comprises:
determining, by the first terminal device based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units comprised in the channel occupancy time, and/or a quantity of terminal devices comprised in the terminal device set, one or more time units occupied by the sidelink resource in the channel occupancy time.

11. The method according to claim 10, wherein the determining, by the first terminal device, a sidelink resource in the channel occupancy time comprises:
determining, by the first terminal device based on one or more of the identifier of the first terminal device, the identifier of the second terminal device, the one or more time units occupied by the sidelink resource in the channel occupancy time, a quantity of frequency units comprised in each time unit, and/or the quantity of terminal devices comprised in the terminal device set, one or more frequency units occupied by the sidelink resource in the time unit.

12. A communication method, wherein the method comprises:

determining, by a second terminal device, a sidelink resource in a channel occupancy time, wherein the channel occupancy time is determined by the first terminal device; and
sending, by the second terminal device on the sidelink resource, sidelink information to the first terminal device, or receiving, on the sidelink resource, sidelink information from the first terminal device.

13. The method according to claim 12, wherein the determining, by a second terminal device, a sidelink resource in a channel occupancy time comprises:

determining, by the second terminal device based on one or more of an identifier of the first terminal device, an identifier of the second terminal device, and/or a quantity of terminal devices comprised in a terminal device set, one or more time units occupied by the sidelink resource in the channel occupancy time, wherein
the terminal device set comprises the second terminal device, or the terminal device set comprises the second terminal device and the first terminal device.

14. The method according to claim 13, wherein the determining, by a second terminal device, a sidelink resource in a channel occupancy time comprises:
determining, by the second terminal device based on a value obtained when the identifier of the first terminal device and/or the identifier of the second terminal device modulo a quantity of time units comprised in the channel occupancy time, a time unit for the sidelink resource in the channel occupancy time.

15. The method according to any one of claims 12 to 14, wherein the determining, by a second terminal device, a sidelink resource in a channel occupancy time comprises:

determining, by the second terminal device based on one or more of the identifier of the first terminal device, the identifier of the second terminal device, and/or the quantity of terminal devices comprised in the terminal device set, a frequency unit occupied by the sidelink resource in one time unit, wherein
the terminal device set comprises the second terminal device, or the terminal device set comprises the second terminal device and the first terminal device.

16. The method according to claim 15, wherein the determining, by a second terminal device, a sidelink resource in a channel occupancy time comprises:
determining, by the second terminal device based on a value obtained when the identifier of the first terminal device and/or the identifier of the second terminal device modulo a quantity of frequency units comprised in one time unit, the frequency unit occupied by the sidelink resource in the time unit.

17. The method according to any one of claims 13 to 16, wherein the identifier of the first terminal device is determined based on an index of the first terminal device in the terminal device set, the identifier of the second terminal device is determined based on an index of the second terminal device in the terminal device set, and the terminal device set comprises the second terminal device, or the terminal device set comprises the second terminal device and the first terminal device.

18. The method according to claim 12, wherein the determining, by a second terminal device, a sidelink resource in the channel occupancy time comprises:
determining, by the second terminal device based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units comprised in the channel occupancy time, and/or a quantity of terminal devices comprised in the terminal device set, one or more time units occupied by the sidelink resource in the channel occupancy time.

19. The method according to claim 18, wherein the determining, by a second terminal device, a sidelink resource in the channel occupancy time comprises:
determining, by the second terminal device based on one or more of the identifier of the first terminal device, the identifier of the second terminal device, the one or more time units occupied by the sidelink resource in the channel occupancy time, a quantity of frequency units comprised in each time unit, and/or the quantity of terminal devices comprised in the terminal device set, one or more frequency units occupied by the sidelink resource in the time unit.

20. A communication method, wherein the method comprises:

    receiving, by a second terminal device, first indication information and/or second indication information from the first terminal device, wherein the first indication information indicates a time domain position of a sidelink resource, the second indication information indicates a frequency domain position of the sidelink resource, and the sidelink resource is determined by the first terminal device in a channel occupancy time; and
    sending, by the second terminal device on the sidelink resource, sidelink information to the first terminal device, or receiving, on the sidelink resource, sidelink information from the first terminal device.

21. The method according to claim 20, wherein the first indication information comprises L bits, and an $i^{th}$ bit in the L bits indicates whether the sidelink resource comprises an $i^{th}$ slot in L time units, wherein i=1, 2, ..., or L, and L is a positive integer.

22. The method according to claim 20 or 21, wherein the second indication information comprises M bits, and a $j^{th}$ bit in the M bits indicates whether the sidelink resource comprises a $j^{th}$ frequency unit in M frequency units, wherein j=1, 2, ..., or M, and M is a positive integer.

23. A communication apparatus, wherein the apparatus comprises:

    a processing module, configured to access, by a first terminal device based on a listen before talk LBT process, a channel and determine a channel occupancy time, wherein
    the processing module is further configured to determine, by the first terminal device, a sidelink resource in the channel occupancy time; and
    a transceiver module, configured to: send, by the first terminal device on the sidelink resource, sidelink information to a second terminal device; or receive, on the sidelink resource, sidelink information from the second terminal device.

24. The apparatus according to claim 23, wherein the transceiver module is further configured to:
send, by the first terminal device, first indication information and/or second indication information to the second terminal device, wherein the first indication information indicates a time domain position of the sidelink resource, and the second indication information indicates a frequency domain position of the sidelink resource.

25. The apparatus according to claim 24, wherein the first indication information comprises L bits, and an $i^{th}$ bit in the L bits indicates whether the sidelink resource comprises an $i^{th}$ time unit in L time units, wherein i=1, 2, ..., or L, and L is a positive integer.

26. The apparatus according to claim 24 or 25, wherein the second indication information comprises M bits, and a $j^{th}$ bit in the M bits indicates whether the sidelink resource comprises a $j^{th}$ frequency unit in M frequency units, wherein j=1, 2, ..., or M, and M is a positive integer.

27. The apparatus according to any one of claims 23 to 26, wherein the processing module is specifically configured to:

   determine, by the first terminal device based on one or more of an identifier of the first terminal device, an identifier of the second terminal device, and/or a quantity of terminal devices comprised in a terminal device set, one or more time units occupied by the sidelink resource in the channel occupancy time, wherein the terminal device set comprises the second terminal device, or the terminal device set comprises the second terminal device and the first terminal device.

28. The apparatus according to claim 27, wherein the processing module is specifically configured to:
   determine, by the first terminal device based on a value obtained when the identifier of the first terminal device and/or the identifier of the second terminal device modulo a quantity of time units comprised in the channel occupancy time, a time unit for the sidelink resource in the channel occupancy time.

29. The apparatus according to any one of claims 23 to 28, wherein the processing module is specifically configured to:

   determine, by the first terminal device based on one or more of the identifier of the first terminal device, the identifier of the second terminal device, and/or the quantity of terminal devices comprised in the terminal device set, a frequency unit occupied by the sidelink resource in one time unit, wherein the terminal device set comprises the second terminal device, or the terminal device set comprises the second terminal device and the first terminal device.

30. The apparatus according to claim 29, wherein the processing module is specifically configured to:
   determine, by the first terminal device based on a value obtained when the identifier of the first terminal device and/or the identifier of the second terminal device modulo a quantity of frequency units comprised in one time unit, the frequency unit occupied by the sidelink resource in the time unit.

31. The apparatus according to any one of claims 27 to 30, wherein the identifier of the first terminal device is determined based on an index of the first terminal device in the terminal device set, the identifier of the second terminal device is determined based on an index of the second terminal device in the terminal device set, and the terminal device set comprises the second terminal device, or the terminal device set comprises the second terminal device and the first terminal device.

32. The apparatus according to any one of claims 23 to 26, wherein the processing module is specifically configured to:
   determine, by the first terminal device based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units comprised in the channel occupancy time, and/or a quantity of terminal devices comprised in the terminal device set, one or more time units occupied by the sidelink resource in the channel occupancy time.

33. The apparatus according to claim 32, wherein the processing module is specifically configured to:
   determine, by the first terminal device based on one or more of the identifier of the first terminal device, the identifier of the second terminal device, the one or more time units occupied by the sidelink resource in the channel occupancy time, a quantity of frequency units comprised in each time unit, and/or the quantity of terminal devices comprised in the terminal device set, one or more frequency units occupied by the sidelink resource in the time unit.

34. A communication apparatus, wherein the apparatus comprises:

   a processing module, configured to determine, by a second terminal device, a sidelink resource in a channel occupancy time, wherein the channel occupancy time is determined by the first terminal device; and
   a transceiver module, configured to: send, by the second terminal device on the sidelink resource, sidelink information to the first terminal device; or receive, on the sidelink resource, sidelink information from the first terminal device.

35. The apparatus according to claim 34, wherein the processing module is specifically configured to:

   determine, by the second terminal device based on one or more of an identifier of the first terminal device, an identifier of the second terminal device, and/or a quantity of terminal devices comprised in a terminal device set, one or more time units occupied by the sidelink resource in the channel occupancy time, wherein the terminal device set comprises the second terminal device, or the terminal device set comprises the second terminal device and the first terminal device.

36. The apparatus according to claim 35, wherein the processing module is specifically configured to:
determine, by the second terminal device based on a value obtained when the identifier of the first terminal device and/or the identifier of the second terminal device modulo a quantity of time units comprised in the channel occupancy time, a time unit for the sidelink resource in the channel occupancy time.

37. The apparatus according to any one of claims 34 to 36, wherein the processing module is specifically configured to:

determine, by the second terminal device based on one or more of the identifier of the first terminal device, the identifier of the second terminal device, and/or the quantity of terminal devices comprised in the terminal device set, a frequency unit occupied by the sidelink resource in one time unit, wherein the terminal device set comprises the second terminal device, or the terminal device set comprises the second terminal device and the first terminal device.

38. The apparatus according to claim 37, wherein the processing module is specifically configured to:
determine, by the second terminal device based on a value obtained when the identifier of the first terminal device and/or the identifier of the second terminal device modulo a quantity of frequency units comprised in one time unit, the frequency unit occupied by the sidelink resource in the time unit.

39. The apparatus according to any one of claims 35 to 38, wherein the identifier of the first terminal device is determined based on an index of the first terminal device in the terminal device set, the identifier of the second terminal device is determined based on an index of the second terminal device in the terminal device set, and the terminal device set comprises the second terminal device, or the terminal device set comprises the second terminal device and the first terminal device.

40. The apparatus according to claim 34, wherein the processing module is specifically configured to:
determine, by the second terminal device based on one or more of an identifier of the first terminal device, an identifier of the second terminal device, a quantity of times of transmission of the first terminal device in the channel occupancy time, a quantity of times of transmission of the second terminal device in the channel occupancy time, a quantity of time units comprised in the channel occupancy time, and/or a quantity of terminal devices comprised in the terminal device set, one or more time units occupied by the sidelink resource in the channel occupancy time.

41. The apparatus according to claim 40, wherein the processing module is specifically configured to:
determine, by the second terminal device based on one or more of the identifier of the first terminal device, the identifier of the second terminal device, the one or more time units occupied by the sidelink resource in the channel occupancy time, a quantity of frequency units comprised in each time unit, and/or the quantity of terminal devices comprised in the terminal device set, one or more frequency units occupied by the sidelink resource in the time unit.

42. A communication apparatus, wherein the apparatus comprises:

a receiving module, configured to: receive, by a second terminal device, first indication information and/or second indication information from the first terminal device; and receive, on a sidelink resource, sidelink information from the first terminal device, wherein the first indication information indicates a time domain position of the sidelink resource, the second indication information indicates a frequency domain position of the sidelink resource, and the sidelink resource is determined by the first terminal device in a channel occupancy time; and a sending module, configured to send, by the second terminal device on the sidelink resource, sidelink information to a first terminal device.

43. The apparatus according to claim 42, wherein the first indication information comprises L bits, and an $i^{th}$ bit in the L bits indicates whether the sidelink resource comprises an $i^{th}$ slot in L time units, wherein i=1, 2, ..., or L, and L is a positive integer.

44. The apparatus according to claim 42 or 43, wherein the second indication information comprises M bits, and a $j^{th}$ bit in the M bits indicates whether the sidelink resource comprises a $j^{th}$ frequency unit in M frequency units, wherein j=1, 2, ..., or M, and M is a positive integer.

45. A communication apparatus, comprising a memory and a processor, wherein

the memory is configured to store program instructions; and
the processor is configured to invoke the program instructions in the memory to perform the method according to any one of claims 1 to 11, perform the method according to any one of claims 12 to 19, or perform the method according to any one of claims 20 to 22.

46. A computer-readable medium, wherein the computer-readable medium stores computer-readable program code, and when the program instructions are executed, the method according to any one of claims 1 to 11, the method according to any one of claims 12 to 19, or the method according to any one of claims 20 to 22 is implemented.

47. A computer program product, wherein the computer program product comprises computer program code, and when the computer program code is run on a computer, the computer is enabled to implement the method according to any one of claims 1 to 11, implement the method according to any one of claims 12 to 19, or implement the method according to any one of claims 20 to 22.

FIG. 1

FIG. 2

```
┌─────────────────────┐                              ┌─────────────────────┐
│ First terminal device│                              │   Second terminal   │
│                     │                              │       device        │
└─────────┬───────────┘                              └──────────┬──────────┘
┌─────────┴──────────────────────────────────────┐             │
│ S301: Access a channel based on an LBT process  │             │
│ and determine a channel occupancy time          │             │
└─────────┬──────────────────────────────────────┘             │
┌─────────┴──────────────────────────────────────┐             │
│ S302: Determine a sidelink resource in the      │             │
│ channel occupancy time                          │             │
└─────────┬──────────────────────────────────────┘             │
```

S303: The first terminal device sends, on the sidelink resource, sidelink information to the second terminal device, and correspondingly, the second terminal device receives, on the sidelink resource, the sidelink information from the first terminal device; or the second terminal device sends, on the sidelink resource, sidelink information to the first terminal device, and the first terminal device receives, on the sidelink resource, the sidelink information from the second terminal device

FIG. 3

FIG. 4

| First terminal device | | Second terminal device |
| --- | --- | --- |

S501: Access a channel based on a listen before talk LBT process and determine a channel occupancy time

S502: Determine a sidelink resource in the channel occupancy time

S503: Send first indication information and/or second indication information, where the first indication information indicates a time domain position of the sidelink resource, and the second indication information indicates a frequency domain position of the sidelink resource

S504: The first terminal device and the second terminal device perform communication on the sidelink resource

FIG. 5

Frequency

Interleaved
resource
block 10

Interleaved
resource block 1

Time

FIG. 6

FIG. 7

FIG. 8

Frequency

| Interleaved resource block 10 | 10 | 16 | 19 | 20 | 20 | 20 |
| | 9 | 15 | 18 | 18 | 19 | 19 |
| | 8 | 14 | 17 | 17 | 17 | 18 |
| | 7 | 13 | 13 | 15 | 16 | 16 |
| ⋮ | 6 | 12 | 12 | 14 | 14 | 15 |
| | 5 | 11 | 11 | 11 | 12 | 13 |
| | 4 | 4 | 7 | 9 | 10 | 10 |
| | 3 | 3 | 6 | 8 | 8 | 9 |
| | 2 | 2 | 5 | 5 | 6 | 7 |
| Interleaved resource block 1 | 1 | 1 | 1 | 2 | 3 | 4 |

Time unit 1                ...                Time unit 6

Time

FIG. 9

Frequency

| Interleaved resource block 4 | 4 | 7 | 2 | 6 | 9 | 14 | 17 | 12 | 16 | 19 |
|---|---|---|---|---|---|---|---|---|---|---|
| | 3 | 1 | 5 | 8 | 10 | 13 | 11 | 15 | 18 | 20 |
| ⋮ | 2 | 6 | 9 | 10 | 4 | 12 | 16 | 19 | 20 | 14 |
| Interleaved resource block 1 | 1 | 5 | 8 | 3 | 7 | 11 | 15 | 18 | 13 | 17 |

Slot 1       ···       Slot 10     Time

FIG. 10

Frequency

| Interleaved resource block 4 | 4 | 7 | 2 | 6 | 9 | 4 | 7 | 2 | 6 | 9 |
|---|---|---|---|---|---|---|---|---|---|---|
| | 3 | 1 | 5 | 8 | 10 | 3 | 1 | 5 | 8 | 10 |
| ⋮ | 2 | 6 | 9 | 10 | 4 | 2 | 6 | 9 | 10 | 4 |
| Interleaved resource block 1 | 1 | 5 | 8 | 3 | 7 | 1 | 5 | 8 | 3 | 7 |

First five slots       Last five slots     Time

FIG. 11

Frequency

| Interleaved resource block 4 | 4 | 7 | 9 | 10 | 4 | 4 | 7 | 9 | 10 | 4 |
| --- | --- | --- | --- | --- | --- | --- | --- | --- | --- | --- |
| | 3 | 5 | 5 | 3 | 9 | 3 | 5 | 5 | 3 | 9 |
| ⋮ | 2 | 6 | 2 | 6 | 10 | 2 | 6 | 2 | 6 | 10 |
| Interleaved resource block 1 | 1 | 1 | 8 | 8 | 7 | 1 | 1 | 8 | 8 | 7 |

Time

Slot

FIG. 12

Apparatus 1300

Transceiver module 1301

Processing module 1302

FIG. 13

Apparatus 1400

Processing module 1401

Transceiver module 1402

FIG. 14

Apparatus 1500

Receiving module 1501

Sending module 1502

FIG. 15

# EP 4 351 248 A1

| INTERNATIONAL SEARCH REPORT | International application No. |
|---|---|
| | **PCT/CN2022/098627** |

**A. CLASSIFICATION OF SUBJECT MATTER**

H04W 72/04(2009.01)i; H04W 74/08(2009.01)i; H04W 4/40(2018.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WPABS; WOTXT; USTXT; EPTXT; 3GPP: 先听后说, 共享, 非授权, 未授权, 频谱, 信道占用时间, 侧行链路, 侧链路, 旁链路, 资源, 时域, 频域, 位置, 指示, 第二终端, 比特位, 标识, 交织资源, LBT, share, spectrum, COT, MCOT, sidelink, SL, side-link, grant, resource, time, frequency, bitmap, SCI, identity, UE, interleaved frequency resource

**C. DOCUMENTS CONSIDERED TO BE RELEVANT**

| Category* | Citation of document, with indication, where appropriate, of the relevant passages | Relevant to claim No. |
|---|---|---|
| X | US 2021136732 A1 (QUALCOMM INC.) 06 May 2021 (2021-05-06) description, paragraphs [0005]-[0161] | 1-47 |
| A | CN 114208319 A (OPPO GUANGDONG MOBILE TELECOMMUNICATIONS CO., LTD.) 18 March 2022 (2022-03-18) entire document | 1-47 |
| A | CN 110536261 A (ZTE CORP.) 03 December 2019 (2019-12-03) entire document | 1-47 |
| A | HUAWEI et al. "NR Frame Structure and Scheduling on Unlicensed Bands" *3GPP TSG RAN WG1 Meeting #92bis R1-1803678*, 06 April 2018 (2018-04-06), entire document | 1-47 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2022** | **22 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098627**

| Patent document cited in search report | | | Publication date (day/month/year) | Patent family member(s) | Publication date (day/month/year) |
|---|---|---|---|---|---|
| US | 2021136732 | A1 | 06 May 2021 | None | |
| CN | 114208319 | A | 18 March 2022 | None | |
| CN | 110536261 | A | 03 December 2019 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110695123